# EUROPEAN PATENT SPECIFICATION

(11) **EP 1 237 371 B1**
(45) Date of publication and mention of the grant of the patent: **29.08.2012**
(21) Application number: 02004878.1
(22) Date of filing: 04.03.2002
(51) Int. Cl.: H04N 7/16, H04N 5/445

(54) **Enhanced television service**
Verbesserter Fernsehdienst
Service de télévision amélioré

(30) Priority: 02.03.2001 US 273139 P; 12.07.2001 US 903973
(43) Date of publication of application: 04.09.2002
(73) Proprietor: MICROSOFT CORPORATION, Redmond, WA 98052 (US)
(72) Inventor: Schrader, Joseph A., Los Altos, California 94022 (US); Blackburn, John W., Passadena, California 91105 (US); San Jule, Todd B., Palo Alto, California 94301 (US); Lee, Alvin P., Oakland, California 94602 (US); Simms, Andrew M., Sunnyvale, California 94068-2407 (US); Scott, Samuel T., Los Gatos, California 95030-2112 (US); Crow, William M., Mariposa, California 95338 (US); Krieger, Allyson M., Redwood City, California 9063 (US); Hart, Michael P., San Francisco, California 94107 (US)
(74) Representative: Grünecker, Kinkeldey, Stockmair & Schwanhäusser

(56) References cited:
- WO-A-00/33576
- WO-A-96/31980
- WO-A1-00/33576
- ANONYMOUS: "Electronic program guide via Internet", RESEARCH DISCLOSURE, MASON PUBLICATIONS, HAMPSHIRE, GB, vol. 385, no. 2, 1 May 1996 (1996-05-01), XP007121030, ISSN: 0374-4353

## Description

### FIELD OF THE INVENTION

The present invention generally relates to manipulating data in entertainment systems and services, and more particularly, the invention relates to a navigation service and system which use Internet protocol data in conjunction with broadcast television programming to provide an enhanced viewing experience to viewers.

### BACKGROUND OF THE INVENTION

Television programming has conventionally been accessed through communication channels including airwave broadcast, cable providers, and satellite transmission. Such services provide viewers a wide variety of entertainment, sports, news, advertisements and educational programming. They typically offer numerous television programs at any given time.

To enable navigation through a listing of available programs, known services supply Electronic Programming Guide ("EPG") data to the viewer. The EPG is presented to the viewer as a static listing of available programming. The EPG data is periodically updated and then downloaded to the user, and thus enables a viewer to search for a particular program of interest. However, with the large amount of programming available, it is often difficult for the viewer to make an informed decision concerning the most desirable programming at any particular time, even with the use of the EPG. That is because known filtering mechanisms, even if used to present EPG data, often provide an unsatisfactory viewer experience due to the volume of information that is presented. Additionally, the data itself is often stale by the time the programming is broadcast. This is particularly true for televised sporting events which do not always actually occur during their scheduled times. Thus, the information provided by the EPG does not always accurately reflect what is being broadcast.

Interactive programming experiences have also been made available to viewers through use of a set-top box, or of other similar computing devices. Interactive programming experiences are intended to enable a viewer to participate in or create a perception that the viewer is actually participating in the television broadcast. In some instances, interactive programming allows a viewer to play along with participants in a game show by simultaneously answering questions and accumulating prizes and the like. Additionally, interactive programming experiences allow viewers to obtain a more thorough understanding of a particular television broadcast. The set-top box enables such experiences by connecting with a Web site to obtain information relevant to a broadcast and then rendering the obtained content on a display in place of or in connection with the television broadcast. For example, the set-top box may connect to a sports-related Web site to obtain information such as a quarterback's passing efficiency rating or other statistics.

Although programming services are now available to provide EPG data and interactive programming experiences in some form, these services suffer from various deficiencies. For example, these services cannot readily convey information concerning other broadcast programming that may be of interest to the viewer based on the programming currently being viewed. Since there is now no adequate way to bundle information across multiple programs, the types of programming and data provided by known services are not truly ubiquitous. Instead, each program is isolated from other programs even though groups of programs may be of general interest to the viewer. Program enhancements are now provided in program-specific content streams. Different data providers offer inconsistent content representations of these enhancements. It is therefore impractical to retrieve and aggregate these content streams due to the overhead requirements that would be imposed, namely, 1 to n tuners for each of the content streams. This prevents browsing the delivered content as a more general, non-program-specific guide. In many instances known services offer too many choices without the benefit of filtering the available programming to the personal tastes of the viewer in such a way that the user can easily make informed decisions.

Accordingly, it would be desirable to have systems and methods that permit users to exert a greater degree of control over the television viewing experience. Moreover, it would be desirable to provide a system and service in which data, such as real-time data, may be linked with broadcast television programming in order to deliver an enhanced programming experience.

WO 00/33576 A discloses a system and method that is directed to an interactive television schedule system having a television apparatus equipped with an interactive electronic program guide (EPG) which provides additional services besides television program schedule information. An EPG screen includes a PIP window and panel advertisement windows. A list of menu buttons including sports button, news button and hometown button displayed on the EPG screen allows access to additional service. The TV system's tuner automatically tunes and displays a program broadcast by a service provider on the PIP window upon actuation of the sports and news buttons.

"Electronic program guide via Internet" RESEARCH DISCLOSURE, MASON PUBLICATIONS, HAMPSHIRE, GB, vol. 385, no. 2, 1 May 1996, ISSN: 0374-4353 discloses the idea to accommodate web pages to become suitable as an electronic program guide. The web pages that have been accommodated in the respective manner enable a user to reproduce or record television programs by way of a simple point and click operation.

WO 9817064 A1 discloses an interactive television system in which a URL representing an Internet web site is encoded in a television signal. The user may link to the web site by selecting an icon displayed on the television screen.

### SUMMARY

It is the object of the present invention to provide a simplified and improved method for selecting television programs and a corresponding system.

This object is solved by the subject matter of the independent claims.

Preferred embodiments are defined by the dependent claims.

The present invention provides an enhanced television viewing experience to users in a system and method that utilizes real time and/or other data that is linked together with broadcast television programming. According to one aspect of the invention, Internet protocol ("IP") content is combined with broadcast television programming in an integrated television service to assist viewer navigation across multiple television offerings. In this aspect, a navigation tool associates a unique identifier provided with a particular television program with a unique identifier provided with the IP data. Based on the IP data, the navigation tool creates visual cues and displays those cues in a navigation area of a screen display. In this way, the navigation tool creates a content wrapper around the television programming. When a viewer selects an available program, such as by selecting one of the visual cues in the navigation area, the system tunes to the channel corresponding to the selected program. The present invention thus converges two or more disparate data type channels, namely, television programming data and IP content.

The invention may be utilized as a novel user interface that filters available television programming according to the preferences of the viewer and which permits the viewer to readily navigate to a desired program. This is accomplished by segregating the video display into several viewing areas including a television program viewing area and a navigation area. The navigation area presents only that programming information which relates to a specific category and/or programming that is currently available. When the invention is employed to present sports programming, the system filters received IP data and presents, on a portion of the display, only those sporting events that are currently in progress and/or may be of particular interest to the viewer. Other features of the invention include the use of visual alerts presented on the display screen. The alerts inform the viewer of occurrences in other related programming that may be of particular interest to the viewer. When the viewer selects the alert and/or another portion of the navigation area, the system automatically tunes to the corresponding program.

### BRIEF DESCRIPTION OF THE DRAWINGS

FIG. 1 is a block diagram representation of a client-server system in one operative environment of the present invention;
FIG. 2 is a block diagram representation of another illustrative operative environment for the present invention;
FIG. 3 is a data structure corresponding to the general data types that are transmitted from a server to one or more client systems according to the invention;
FIG. 4 is a block diagram representation of certain components that may be used the server-client system shown in services in the embodiments of FIG. 1;
FIG. 5 is a block diagram representation of an illustrative client system that may be used in the embodiments of FIG. 1 or FIG, 2;
FIG. 6 is a flow chart illustrating certain operational aspects of a sports content aggregator component as shown in FIG. 4;
FIG. 7a is a flow chart illustrating certain operational aspects of an application executing on the client system shown in FIG. 5 according to one embodiment of the invention;
FIG. 7b is a flow chart illustrating certain operational aspects of an application executing on the client system shown in FIG. 5 according to another embodiment of the invention;
FIG. 8 illustrates a first navigation guide deliverable to a viewer;
FIG. 9 shows another navigation guide that has a layout similar to that shown in FIG. 8;
FIG. 10 is a navigation guide according to another embodiment of the invention;
FIG. 11 shows a navigation guide that has been updated based on user selection of a navigation element presented in the screen shown in FIG. 10;
FIG. 12 is a navigation guide that is similar to that shown in FIG. 11;
FIG. 13a is a navigation guide illustrating a first Alert being presented to the viewer;
FIG. 13b is a navigation guide that is similar to FIG. 13a in that a second type of Alert is presented to the viewer,
FIG. 14 is a display screen showing information concerning future recordable events according to another feature of the invention;
FIG. 15 is another navigation guide showing preview information; and
FIG. 16 is a navigation guide showing currently available music programming according to another embodiment of the invention.

### DETAILED DESCRIPTION OF THE INVENTION

The present invention relates to systems and methods for delivering television programming and related content to a viewer to enable an enhanced program viewing experience. More specifically, the invention provides a navigation service that supplies Internet protocol ("IP") data and broadcast television programming. The IP data is linked with the broadcast television programming and presented in such a way as to permit an informed choice to be readily made by the viewer. In one embodiment, the invention segregates a video display into various display areas including a navigation display portion and a program display portion. The navigation display portion presents IP data that has been filtered in accordance with currently available selections of a specific type of programming. Selecting a navigation element within the navigation display portion causes the system to tune to the television program corresponding to the selected navigation element and to display that program in the program display portion. By linking or associating parallel sources of data in this fashion, the viewer can tune to one or a multiplicity of television programs based on an informed choice presented on the display.

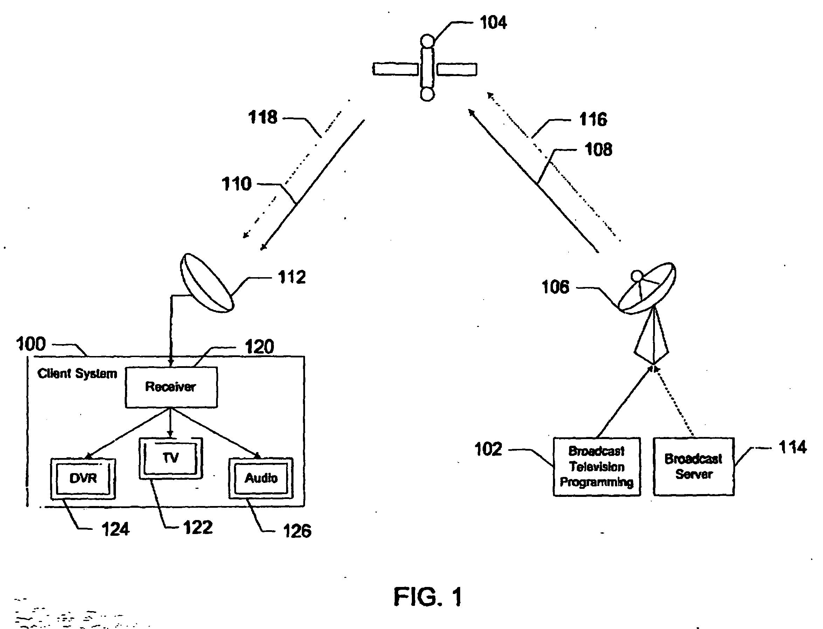

FIG. 1 illustrates a block diagram representation of a suitable environment in which a navigation system 100 according to the present invention is implemented. In this embodiment, a server-client system is operable to provide broadcast television programming and Internet protocol (IP) data over different broadcast channels. As used herein, IP data is intended to refer to data that is packaged in accordance with a protocol that informs the transmission network how data packets are addressed and routed. Those skilled in the art will appreciate that, while the invention is described primarily in the context of providing IP data in parallel with a broadcast channel, other types of data may be transmitted as well. That is, the invention may be incorporated in any environment in which data streams are intended to be associated with television programming in some way.

As shown in FIG, 1, television programming, as denoted by the functional block 102, is broadcast to one or more client systems via a broadcast network denoted by a digital satellite system 104. In particular, the available television programming is up-linked via a transmitter 106 to the satellite system 104 over a communication channel 108. In this point-to-multipoint system, the programming is downlinked via a data communication channel 110 to a plurality of client systems, one of which is shown as client system 100. The programming is captured by a receiver 112, as shown diagrammatically in FIG. 1.

In addition to the broadcast television programming, a parallel data stream, such as an IP content stream related to the programming, is generated by a Broadcast Server 114. The parallel data stream is similarly up-linked to the satellite system 104 via a data communication channel 116. The IP content stream is downlinked to the client system 100 via a second downlink communication channel 118. As explained below, the client system 100 in this embodiment comprises a receiver 120 or other similar computing device that decodes and processes the data received from the antenna receiver 112. The client system 100 also includes a display device such as television (TV) 122. Alternate embodiments include Personal Digital Assistants (PDAs), cellular telephones and other computing devices, and optionally other audio/visual equipment. In FIG. 1, this includes an external digital video recorder (DVR) 124 and an Audio system 126.

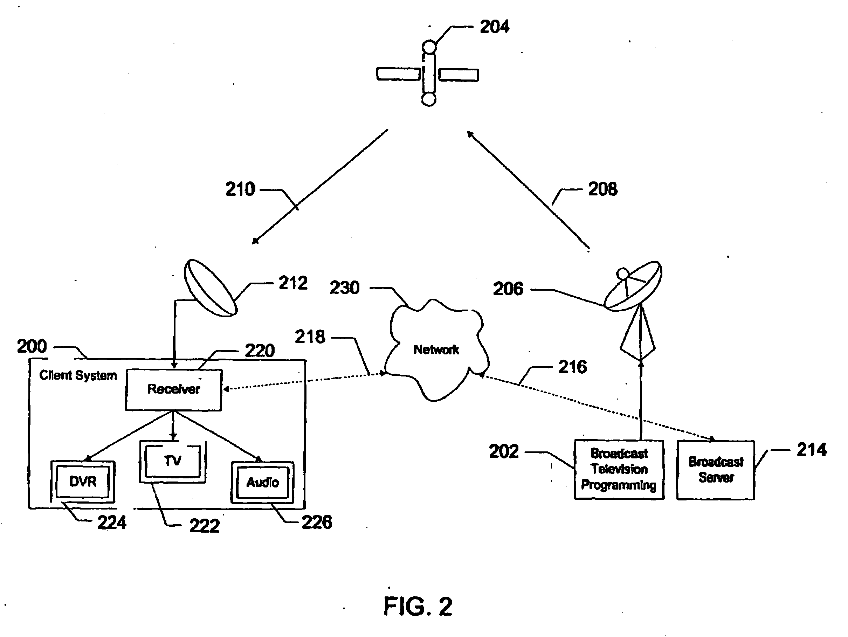

Data services are sometimes transmitted to the client system via a network 230, as illustrated in FIG. 2. This embodiment is similar to the embodiment in FIG. 1 in that broadcast television programming data is up-linked to a satellite system 204 via transmitter 206 over a communication channel 208. The programming data is downlinked to the client system 200 via a communication channel 210 to antenna receiver 212. However, in FIG. 2, IP content is transmitted to the client system 200 via the Wide Area Network (WAN) network 230 through network connections 216 and 218. The client system 200 also accesses the server 240 via network. The client system 200 also includes a digital video recorder 224, a television device 222 for displaying and an audio device.

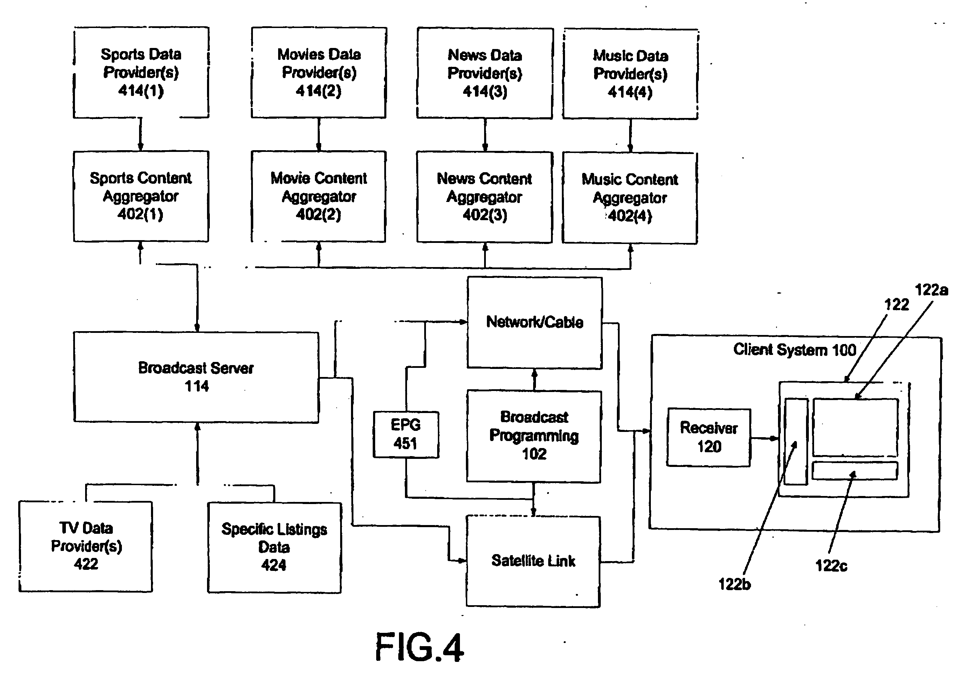

While FIG. 1 and FIG.2 illustrate delivery of television programming via a satellite system, such programming may alternatively be delivered via a cable television system. In one embodiment of the invention, television programming is provided through a digital cable system that delivers multiple channels of video data in a compressed format, such as MPEG II format. Other broadcast television systems may be used. Thus, FIG. 4 shows delivery of broadcast programming through either (or both) a satellite link or through a network/cable system.

For both the satellite and digital cable embodiments, data services in the form of enhanced IP content may be provided to the client systems in a dedicated data communication channel. In this embodiment, the Broadcast Server 144 or head-end pre-allocates the bandwidth to accommodate the data services in a channel or bundle of channels that are reserved for exclusive use of these services. However, data services may be transmitted in any manner. For example, such data services may be interleaved with the television programming. That is, for both the satellite and digital cable embodiments, data services may be inserted into the MPEG video stream in the form of a "trickle stream" of IP data. The use of a trickle stream avoids the allocation of additional communication channels.

To reduce the bandwidth, the generated trickle stream preferably contains only dynamic content such as real-time event notifications and program updates. Other content may be periodically transmitted either via a separate broadcast data communication channel or via the WAN. This embodiment may be used where bandwidth at the server or head-end is not pre-allocated. The use of a trickle stream further provides advantages on the client side since a tuner need not be tuned to the channel delivering the IP content to obtain the enhanced services. This results in greater viewer option and control over the television viewing experience.

Other transports may be used to deliver the enhanced data stream. By way of example, a non-program synchronous ATVEF transport may be used in some instances.

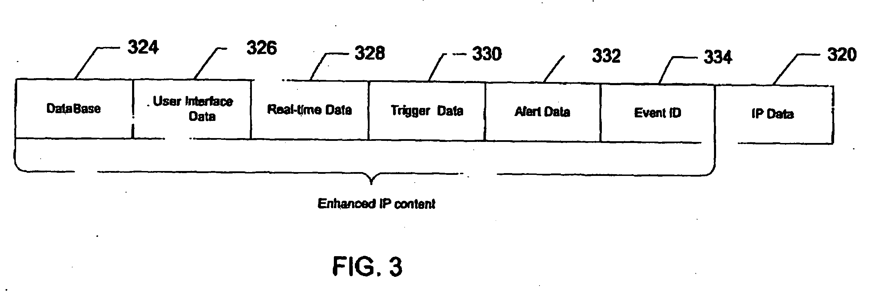

FIG. 3 illustrates an exemplary data structure for such data services. An IP data header 320 specifies network protocol information, information concerning transfer between applications, and an appropriate encoding method, for example, NTSC compliant encoding. The IP data 320 encapsulates information concerning one or more television programs. Such data generally includes a portion of a television transport stream that contains database information 324 and/or user interface information 326 for creating an enhanced navigation tool to permit the viewer to perform an informed search for a particular program. This information may be packaged as HTML files or other types of data files.

As explained below, the enhanced IP data is sometimes augmented with, among other things, real-time data 328, trigger data 330 and Alert data 332. "Enhanced IP data" refer to any type of data that includes associated identification data or can be associated with a particular television program in some fashion. In any event, such data is coupled with identification data, shown in FIG. 3 as an Event Identifier 334, associating the data packet with a corresponding television program. The Event ID is an ID that associates any type of enhanced IP data to a television program. The Event ID may be created by usinga custom ID that is assigned to IP data, the Event ID may be created by mapping heterogeneous Ids previously assigned to IP data or broadcast programming into a single homogeneous Event ID system, or theEvent ID may be derived from or be the same as a pre-existing universal ID system, if one is available.

Thus, in accordance with the present invention, for each television program that is available through this service, an Event Identifier for the program is also provided. In one embodiment, then, an enhanced television schedule is created and periodically downloaded to the client systems. Each entry in the enhanced television schedule includes an Event Identifier, an event time and a market identifier corresponding to the channel number or tuner position for a particular local television market.

For creating an enhanced user experience, the IP data is augmented in some fashion before it is routed to the client system. For example, real-time event data relating to the active status of available television programming may be inserted in the IP stream and provided to the client system. Such data is used to create various real-time tunable alerts, triggers or filters and the like. The client system processes such data to create real-time visual indicators and cues and presents the visual indicators and cues together with IP data. Thus, for example, data corresponding to current status indicators of available sporting events and for invoking specific actions are provided to the client system. As explained below, the real-time data may be transmitted as event-based Extensible Markup Language (XML) representations. In one embodiment, such enhanced IP data is routed to the client systems through the transmission of IP encapsulated data from a server. The server is a dedicated server in one embodiment. Alternatively, the server may be located at the head-end of various cable operators, for example, the server 112 illustrated in FIG. 1 or the server 212 in FIG. 2. The XML event data is sometimes supplied to the client systems independent of the enhanced sports schedule data, but may be used in conjunction with such data in other embodiments.

The communication channel 221 shown in FIG. 2 may also be used as a back-channel to enable the initiation of requests for Internet services by the client system 200. In this way, additional data concerning the programming currently being broadcast may be retrieved from the Internet and provided to the viewer as well. For example, the data may permit the viewer to connect to a related web site to obtain relevant information concerning the broadcast.

In an embodiment relating to the delivery of information related to sporting events, a data provider and/or broadcast server create the real-time and other content that is delivered to the client system. As explained below, in one embodiment, a sports content aggregator creates a normalized data stream that includes an Event Identifier associated with each sports related event or meta data provided by external sports data providers. The content aggregator transmits the normalized data stream, in one embodiment, with prioritization, to a broadcast server. The normalized data stream preferably conforms the various data received by the sports content aggregator to an API being used by the broadcast server. The broadcast server then matches a local line-up data to the Event Ids being transmitted by the content aggregator to create a new themed programming schedule indexed by Event ID, in this example, the theme being sports.. In one embodiment, the content aggregator receives data from external sources that has no data ID or its own unique data ID. In this embodiment, the content aggregator maps the data to a single Event ID system, and transmits the normalized data to the broadcast server as indexed by Event ID. Alternatively, the content aggregator receives the external data already mapped to a single Event ID system. The broadcast server then periodically supplies the updated enhanced schedule to the client systems. When a sporting event is being broadcast, the content aggregator aggregates and normalizes various live data feeds to generate certain real-time event notifications, alert notifications and other data that are mapped to an Event Identifier. This enables a client system to manipulate such data to present, among other things, tunable alerts and other real-time indicators that have previously been associated with an appropriate Event Identifier. In response to selecting such a tunable alert, the client system tunes the television to the channel corresponding to the Event Identifier. The client system also uses such data to indicate other information, such as status information indicating that a particular game is active, inactive or has extended beyond a previously scheduled time.

As shown in FIG. 4, a Broadcast Server 114 operates in conjunction with several components to create the data services associated with the television content stream delivered to the client systems. Various content aggregators 402 generate normalized data feeds corresponding to various events or pieces of content that may be available for viewing. For example, the Sports Content Aggregator 402(1) receives various data feeds based on events that occur in the televised games of interest from external Sports Data Providers 414(1). The data feeds include, for example, sports status real-time data, sports statistics and editorial data from Internet data services such as STATS, Inc ™, the Associated Press ™, and the like. The Data Providers 414 may be external to the Content Aggregator 402 or portions may be a part of the Content Aggregator 402. As explained below, in one embodiment, the Content Aggregator 402 also receives a plurality of Event Identifiers, each of which corresponds to a particular event or piece of content of interest. Alternatively, the Content Aggregator 402 receives data Ids and the data Ids are then later matched with an Event ID by the broadcast server 114, or the content aggregator 402 receives data without Ido and transmits the data to the broadcast server 114 which then assigns and event ID to the data.

In one embodiment, the Content Aggregator 402 then processes the data feeds by assigning priority properties. In particular, information that is considered to be dynamic content, such as real-time indicators, alerts, and scoreboard status changes, are assigned with high priority. A next priority level, such as a "Fast" priority, is assigned to information such as the box scores of games currently in progress. A "Normal" priority is assigned to information that typically changes on a daily basis, such as news events relevant to a program of interest. Finally, a "Low" priority is assigned to content such as pictures, schedules, or other relatively static information concerning the program of interest.

Assignment of different priority levels to the received data feeds enables the Sports Content Aggregator 402(1) to manage the bandwidth of the various data streams more efficiently and conveniently. In the described embodiment, the Content Aggregator 402 sorts and groups the incoming data feeds according to assigned priority levels. The sorted and grouped data feeds are then output to the broadcast server 114, responsive to the assigned priority levels. In one embodiment, multiple data transmission channels are used to transmit the different priority data. For example, a "High" priority data feed transmission; a "Fast" priority data feed transmission, a "Normal" priority data feed transmission; and a "Low" priority data feed transmission may all be used to transmit the data in accordance with the present invention. Thus, the data feeds may be simultaneously transmitted according to their priority levels. In this embodiment, each of the data transmission channels is implemented independent of other channels. Alternatively, a single transmission is generated that accommodates all of the different prioritization levels. The data transmission channels are implemented as either logical channels or physical connection channels. In general, the dynamic content streams associated with real-time events in the sports telecasts are used to generate real-time indicators on the client side to enable a tunable Alert or indicator. However, such real-time data may also be used to invoke some other action.

In addition to dynamic content concerning the current status of various sporting events, the Sports Content Aggregator 402(1) also generates a game log of indices of those sporting events according to predetermined game rules that apply to particular sporting events. The indices are created from the various data feeds provided by the Sports Data providers 414, and include data such as when a ball is snapped, when a time out is called, and the like. Then, by way of example, to index a football game, XML representations of game segments are created by the Content Aggregator 402. In this example, a first game rule may require a log to be captured each time the football is placed into play, i.e., each time the ball is placed into play from scrimmage and for any kick-off. A second rule may require a log to be captured whenever the whistle blows ending a play, or some preselected time thereafter. In this way, the Content Aggregator 402creates real-time DVR data that may be utilized by a client application to permit a "smart skip" forward and backward playback DVR capabilities to enable a viewer to jump between plays of interest.

Other game rules may be applied to create different levels of game segments. These may include generating an event log whenever any play results in a yardage gain of more than 20 yards, generating an event log on the occurrence of a turnover, and/or other important events such as scoring plays. These event logs are filtered by the client application to enable viewing of highlights or other game segments.

By capturing such logs, the Content Aggregator 402 creates a series of XML representations of segments of the football game. As explained below, when such information is transmitted to a client system, it may be filtered in one or more playback modes. These include playback of active game play only, playback of specific player participation, or playback of other highlights according to the created game segments.

Other information and content, such as pictures, schedules and the like, are assigned with low priority. According to the invention, High priority information is transmitted dynamically, such as via digital satellite. On the other hand, Low priority information may be transmitted via a relatively slower transmission channel, for example, via the Internet. The Content Aggregator 402 also formats the data streams for optimization as a one-way broadcast to a Broadcast Server 114.

The Event Identifiers may be mapped in various ways to the particular sports content streams. In the illustrated embodiment, the Sports Content Aggregator 402(1) functions to normalize the various data streams to an appropriate Event Identifier. In particular, the Content Aggregator 402(1) retrieves Event Identifiers, each uniquely corresponding to a particular sporting event as assigned by one or more sources. These include the sports statistics and/or editorial vendors that provide information to the Content Aggregator 402(1). The Broadcast Server114 also maintains a database containing line-up entries indexed by Event Identifiers. The Content Aggregator 402(1) also creates new records based on received Event Identification information. In this way, the Content Aggregator 402(1) maps Event Identification data between multiple sources of program information, sports statistics, other broadcast information and enhanced data streams. Alternatively, the Content Aggregator 402(1) maps heterogeneous event ID data into a single homogeneous Event ID system, as discussed previously.

FIG. 4 illustrates additional content aggregators that optionally may be used in accordance with the invention to create Event Ids. As shown, a Movies Service Provider 404, a Music Service Provider 406 and a News Service Provider 408 also provide normalized output data streams to the Broadcast Server 114. That is, for each television program, movie, or other piece of content, the appropriate service provider creates an Event Identifier for each program, event, or piece of content and associates that Identifier with content related to that program, event, or piece of content. For example, each movie in a movie database may receive an Event Id. Then, meta-data related to the movie is also assigned the same Event ID. Such data may include movie reviews, trailers, previews, interviews, etc. In News, events may be assigned Event Ids, such as an election scandal, an AIDS conference, a legislative debate, or the like. Then, meta-data associated with the event is also assigned the same Event ID, including web sites relating to the event, video clips, etc. For Music, a database of songs and artists each may receive an Event ID, and the meta-data relating to songs and artists receive the same Event ID. Other Service Providers 402 for different categories can similarly create Event IDs that associate the programs, events, and contents related to their category with Event Identifiers.

While the Sports Content Aggregator 402 operates as a data "push" model in which the various data feeds are aggregated and transmitted to the Broadcast Server, the service providers (including the Sports Content Aggregator 402) may optionally function in a "pull" model. For example, the Movies Content Aggregator 402 contains a movies database, with enhanced content streams, and associated Event Identifiers. In this instance, the Broadcast Server 114, upon receipt of local listings information, polls the Movies Service Provider 402 for enhanced data corresponding to the local listings.

In one embodiment, after receiving the normalized data stream from Content Aggregators 402, the Broadcast Server 114 receives television listing data specifying the local line-up for a given viewer. Specifically, television data services, such as Tribune Media Service data, are supplied through a data service 422. In addition, data concerning specific program listings provided by local carriers is supplied through a Network Operator Service 424 are provided to the Broadcast server 114. By way of example, the specific listing data provided by this service may include scheduling information corresponding to DIRECTV NFL Sunday Ticket information or the like.

The Broadcast Server then matches the schedule data with the local listing data. In a sports embodiment, the Broadcast server 114 performs the matching by retrieving date, time, team names, and league names from the data accompanying the Event ID of a particular piece of IP data. Then, the Broadcast Server 114 uses conventional fuzzy logic matching to match that with TV listing data which typically comprises date, time, a field indicating whether the event is live, a program description, and a program category. After this matching is performed, the Broadcast Server 114 can create a new enhanced sports schedule that correlates IP data with the local channel line-up of a particular viewing region. For the News Content Aggregator, the matching matches a topic description provided with the Event Ids to program descriptions, and dates of TV listings. Thus, a topic may be an AIDS conference that is occurring on a specific day, and the Broadcast server 114 searches program descriptions for TV listings of that day to identify news programs that are discussing the conference. Once such a news program is identified, it is assigned the AIDS conference Event ID. For Movies, the Broadcast Server 114 matches the Event ID information with titles, date made, and attributes of the movie (such as director's cut, letterbox, and the like) to assign Event Ids to a particular movie that is being broadcast. For all of the matching steps, human editing may also be used as a quality check on automated matching. Then, on a periodic basis, the Broadcast Server 114 generates an updated themed (e.g., sports, music, movies, news, etc) schedule in which the Event Identification data is matched with the local television line-up for a specific market, and transmits updated schedule to the client systems.

The modular architecture employed in this embodiment permits the Broadcast Server 114 to route domain specific television schedule data received from the Service Providers 402, 404, 406, and 408 in the same fashion. Also, the Broadcast Server 114 may customize the schedule data to a specific viewing location. For example, the Broadcast Server is able to match the enhanced data to any changes in local channel lineups since the schedule information is updated daily. This provides advantages over known EPG delivery systems. Since they are updated less often, these systems often mismatch the EPG to local listings, particularly when occurrence of the sporting event is uncertain. The Broadcast Server 114 optionally performs additional localized functions with respect to the normalized data streams received from the Service Providers. However, modularization of these server components is optional.

The Broadcast Server 114 transmits the enhanced and normalized data streams to the client viewers for enhancing the viewing experience, as explained in further detail below. In one embodiment, the Broadcast Server 114 also performs the function of the Content Aggregator 402. In this embodiment, the Broadcast Server 114 receives from the Sports Provider (or other provider) 414 heterogeneous data associated with different enhanced IP data from a variety of sources, television schedule information from a variety of sources (such as a cable provider, a satellite provider, a TV listings service such as the Tribune Media Service, or the like), and create a single sports or other themed schedule that relates the enhanced IP data with the different program listings to create "tunable" IP data. In an alternate embodiment, the different Content Aggregators 402 create enhanced theme schedules by issuing calls to a centralized TV listings database to extract the TV listing information and then maps the extracted TV listings to the Event Ids as discussed above to create an enhanced schedule, which is then transmitted to the Broadcast Server 114 which transmits the schedules to the clients.

The Broadcast Server 114 also preferably manages and schedules the delivery of various formatted content streams. This may be performed by polling, in real-time fashion, the availability of such content based on a set of delivery rules. Thus, for example, the delivery of data supplied by other content sources, such as advertisement information, may be appropriately scheduled.

The Broadcast Server 114 supplies the processed real-time data streams and mapped data enhancements through a transmission medium the client systems, such via the network/cable transmission system or the satellite link to the client system 100 shown in FIG. 4. Other information such as EPG data may also be transmitted over these media. The data streams are received by the receiver 120 and processed for presenting on display device 122. As explained below, the display device 122 is segregated into various display areas including a viewer area 122a for displaying a currently tuned television channel, a dashboard or navigation display area 122b for presenting real-time scores and other statistics and a tunable alert area 122c for providing real-time information that, when selected, enables the client system to tune to the associated channel.

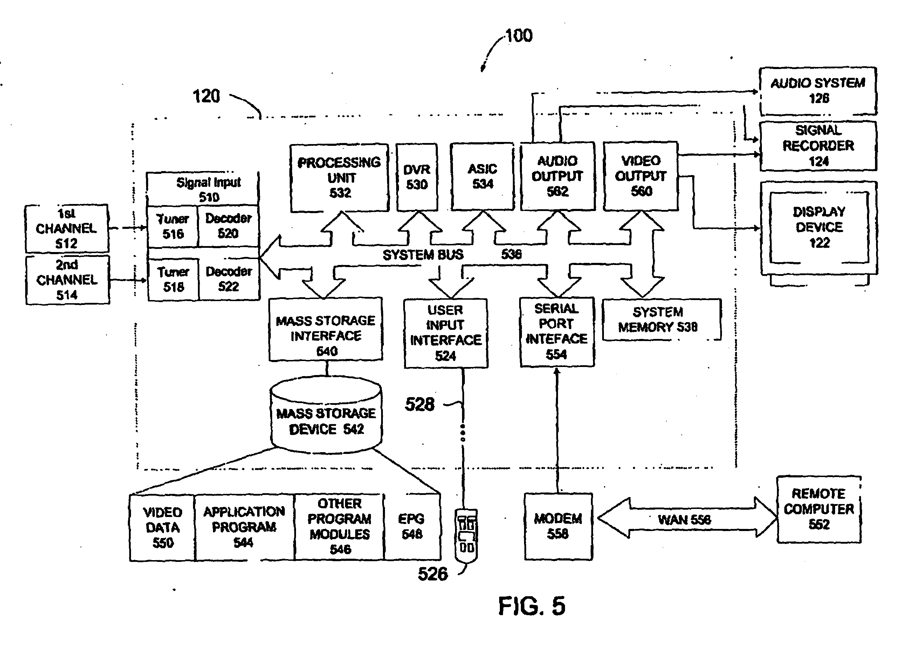

FIG. 5 is a block diagram representation of an exemplary client system 100. The client system 100 is implemented as a set-top box, cellular telephone, video game console, PDA, or other embedded computing device that is configured to receive broadcast television programming and data services. The client system 100 includes two or more digital tuners for receiving digital satellite television programming and/or IP content The client system 100 also includes advanced digital-video-recording ("DVR") capabilities. This enables the simultaneous recording of television channels as desired as well as pause, replay, slow motion and picture-in-picture viewing capabilities. The client system 100 facilitates television navigation and viewing, as well as Internet navigation. However, those skilled in the art will appreciate that, while the above features are advantageous, many other client systems may be utilized to implement the invention as well.

The client system 100 provides output video to a display device 122. The display device 122 may be implemented as a high definition television display, a standard television display, a computer monitor, or other device capable of displaying images or video represented by image or video data. The client system also includes an external signal recorder 124 and an audio system 126. The audio system represents a speaker, stereo system, or a device capable of presenting sound represented by sound data.

The client system 100 comprises a signal input module 510, which receives digital television programming and/or other data from first and second data communication channels 512 and 514 via first and second digital tuners 516, 518, respectively. While the programming is preferably transmitted via a digital satellite system (see FIG. 1), such information may also be transmitted via a digital cable system (see FIG. 4), cable or optic connection, a terrestrial antenna system, or any other device or system capable of transmitting programming and IP content to the home client system 100.

When the digital signal includes multiple channels, the first digital tuner denoted by the block 524 tunes to a selected channel in the signal. If only one tuner is utilized, the selected channel includes a trickle stream of IP content to provide enhanced services to the viewer. Multiple digital tuners are preferably used to provide enhanced viewing features, such as picture-in-picture, recording one channel while viewing another, and recording a plurality of channels simultaneously. In the disclosed embodiment of the invention, at least one additional tuner 526 is adapted to receive the digital signal and tune to a second channel. This enables the IP content to be delivered over a separate channel where it is received by the tuner 526. However, even when the client includes multiple tuners, a trickle stream may be included in a selected channel along with television programming to avoid allocation of a tuner to receipt of IP content. This enables the viewer to utilize the additional tuner 526 for viewing and/or recording options, while at the same time receiving the services according to the invention.

A pair of signal decoder modules 520 and 522 converts the received video data into an appropriate data format. For example, the video decoders 522 may decode the received video data stream from a compressed video format (e.g., MPEG-2 format). Thus, although FIG. 5 illustrates the client system 100 as receiving data via two data communication channels 512 and 514, it should be understood that a plurality of programming input lines that transmit programming from a plurality of signal sources may be used. In such embodiments, the client system 100 receives the programming from one signal source or from a plurality of signal sources at a time.

The client system 100 also includes a user input interface 524, which receives input control signals from an input device 526 such as a remote control, a keyboard, a microphone, or other any other device capable of generating electronic instructions for the client system 100, Input device 526 is coupled to the client system over an input link 528 to enable transmission of such control signals. Input device 526 generates electronic instructions over input link 528 in response to preprogrammed data or in response to a viewer pressing buttons on input device 526. Input device 526 also controls web browser software within the client system 100.

FIG. 5 also illustrates a DVR device 530 for receiving video and/or audio data and recording such data on a storage medium. In the illustrated embodiment, the DVR device 530 is contained within the set-top box 120. Alternatively, or in addition to the internal DVR device 530, signal recorders such as recorder 124 may be provided external to the set-top box.

A central processing unit (CPU), illustrated as processing unit 532 in FIG. 5, controls operation of the set-top box 120. The CPU 532 is coupled to an application specific integrated circuit (ASIC) 534 and uses computer executable instructions implemented in software and/or hardwired logic circuitry. The CPU 532 and ASIC 534 are coupled via a system bus 536, which also interconnects various other system components. These include system memory 538, mass storage interface 540, user interface 524, and signal input device 510. The CPU 532 executes software designed to implement features of the client system 100 including features of the present invention. The ASIC 534 contains circuitry that is used to implement certain functions of the system. Instructions, data and other software necessary for the operation of processing unit 532 and the ASIC 534 may be stored in the system memory 538, and/or in a mass storage device 542, which is coupled to mass storage interface 540. The system memory 538 and mass storage device 542 are communicatively coupled to the ASIC 534 to permit data to be read from, or written to the system memory and possibly the mass storage device.

The mass storage device 542 is implemented as a magnetic hard disc or any other magnetic or optical mass memory device that is capable of storage large amounts of data. Computer readable instructions or data, including an application program 544, other program modules 546 and an electronic program guide (EPG) database 548, which specifies the broadcast times and channels of programs can be stored in mass storage device. In addition to the EPG data provided by the second data communication channel, EPG data may be supplied on a regular basis to continually maintain a current schedule of programming at the client system 100. When the client system 100 is associated with the Internet, the data included in the EPG may be downloaded from the Internet. Alternatively, the EPG may be delivered to the client system by using a direct dial communication over standard telephone lines, or by using data transmission over the cable television infrastructure, a satellite network, an over-the-air broadcasting, or any other available medium. Video data 550 is also stored on the mass storage device. As explained below, such data may thereafter be accessed and read out for viewing on the display device.

The client 100 typically communicates with a network server (not shown) and with other remote computers such as computer 552 as will be understood by those skilled in the art. Communication over a Wide Area Network 556 is facilitated by a serial port interface 554 that is interposed between the system bus 536 and a modem 558, or other appropriate means for establishing communications over a WAN 556. The client system is also capable of transmitting information via the network (e.g., the Internet) by direct dial communication over standard telephone lines, or by using any other available communication medium as described above.

The client system 100 also includes a video output circuit 560 which may include a video encoder and/or a video converter. The video encoder assigns a code to frames of video data that are transmitted across a video image link and switches between analog and digital formats as necessary. Similarly, audio output circuit 562 can include an audio converter to provide the necessary switching between analog and digital formats.

The use of multiple digital tuners and one or more digital recording devices provides numerous advantages in implementing the present invention. For example, live television controls may be provided to further enhance the viewing experience. That is, such controls may be employed to pause for a particular time, e.g., 30 minutes, or to create instant replays, or to view action with slow motion control, even frame-by-frame, based on the live broadcast television signal. In a preferred embodiment, the client system automatically records enhancements so that the viewer may, at a later time, use interactive enhancements at his or her convenience.

The invention provides various user interface enhancements in the form of graphical and informational elements that overlay a portion of the display screen. As explained below, these enhancements aid the viewer in making informed decisions concerning available television programming.

One such user interface enhancement is a television navigation tool. The navigation tool provides improved interoperability with viewers as it guides the viewers to currently available events of a particular type across one or more networks. Thus, in one embodiment, the invention guides the viewer to sporting events that are currently available by presenting a listing of such events in a navigation display area on the screen. The event listing presented in the navigation display area may also be filtered according to the viewer's preferences. That is, the viewer may only be interested in currently available football games. The navigation tool may in this instance be utilized to present only the currently available football games, such as the National Football League games currently in progress on a given Sunday afternoon.

In accordance with one feature of the invention, the information presented in the navigation display area is based on filtered enhanced sports scheduling data that presents up-to-date information to the viewer. For example, icons may be utilized to indicate a particular event identified in the display area is currently in progress and/or a condition in that event has occurred or is about to occur. Thus, the navigation display area only displays those items that are currently available to the viewer. In this embodiment, a user may select an appropriate program by selecting that portion of the navigation display area corresponding to the desired program. The system then automatically tunes to the channel corresponding to that program identified in the navigation display area. In addition, the display may present information such as events that will be available in the future.

To present such information to the viewer, the client system 100 shown in FIG. 5 is operable to extract the Event Identifier associated with the data provided in the generated content stream. The system then searches a previously delivered enhanced sports schedule, which also contains associated Event Identifiers. This permits the system to automatically tune to the program corresponding to the Event Identifier based on a selection thereof by the user.

As discussed above, the Event Identifier data is associated with other generated content such as, for example, real-time indicators, Alerts, DVR trigger information, and other enhanced content. To provide this information to the client system for enhancing the viewing experience, the client system executes one or more application programs. These are based on one or more underlying data engines for processing the received content. Table 1 below identifies exemplary application programs that may be built on top of associated engines. As shown, an exemplary sports application program creates navigation tools such as the "On now" tool. This program is built on top of a data processing engine adapted to process received real-time indicator data. Similarly, game alerts, such as player alerts and time in/time out alerts are provided with the use of an Alert processing engine. For providing game indexing, a DVR engine performs the function of extracting indexing information. Also, an Enhanced content processing engine enables the presentation of content such as game preview information used in conjunction with DVR features of the invention.

**TABLE 1**

| **Engine** | | | | | |
|---|---|---|---|---|---|
| | **Sports** | **News/Finance** | **Television Programs** | **Music** | **Movies** |
| Real-time indicators | "On now" navigation | Story segments | "On now" navigation | Radio, song list | "On now" navigation |
| Alerts | Player alerts, time in/time out alerts | News alerts and tune | Guest Appearances on Talk Shows | Band starts playing | Celebrity alert |
| DVR | Game indexing | Indexed news program | Indexed Award Shows. Record portions of shows (monologues) | Indexed Music video | Indexed show of movie review or trailers |
| Enhanced content | Game previews with record button | Related Content w/record button | | Discography, related artists | Filmography review w/ record buttons |

Other application programs may be implemented to use the same underlying processing engines. For example, an application related to delivery of News may employ the real-time processing engine for providing viewer indication of currently available story segments. Similarly, the application may employ the Alert processing engine for providing News alerts and tuning capabilities. As with the game indexing function performed with respect to the above described sports application program, the News application may employ the DVR engine to process indices for news programs. In one embodiment, the application displays an alert if a video segment about a viewer's favorite company is about to begin as part of an ongoing news program on another channel. In this example, the ongoing news program has been previously processed and logged, and an Event ID was assigned to the video segment that is mapped to the local channel that will be displaying the video segment. Then, the Event ID is mapped to the IP data comprising the alert. When the alert is displayed, stating "Tune Now for Report on Company X!", the viewer can select the alert and then tune into the video segment about his or her favorite company. Table 1 above also illustrates a Music application that provides a navigation tool to currently available digital radio programs or a song list of available music-related television programs, as explained in greater detail below. The Alert processing engine may be employed in this example to create notifications such as when a band on a particular television starts playing. The DVR processing engine is employed to process indices corresponding to music video programs. Finally, a Movies application provides a navigation tool to currently available movies. The Alert processing engine may be used in this instance to create notifications of a particular type of scene, such as a love scene, involving a celebrity.

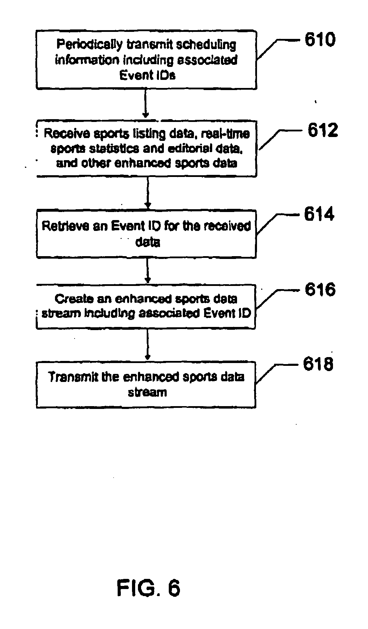

FIG. 6 is a flow chart illustrating certain operations of the Sports Content Aggregator 402(1) shown in FIG. 4, For creating data streams with tunable Alert information that may be transmitted to one or more client systems, an enhanced sports schedule is first created and transmitted to the Broadcast Server 114, and finally to one or more client systems, as shown at a block 610 in FIG. 6. As explained above, such schedule information includes, for a particular sporting event, an associated Event Identifier. Then, during the occurrence of the event, the Sports Content Aggregator 402(1) receives sports listing data, real-time sports information, sports statistics and editorial data, and other sports enhanced data, as shown at a block 612. As mentioned above, the Sports Content Aggregator 402(1) also retrieves an Event Identifier for these data, as shown at block 614. Next, at block 616, the received content is associated with local channel information according to the Event Identifier. At block 618, the Aggregator 402(1) creates an enhanced sports data stream, including the associated Event Identifier, for transmission. Finally, at a block 620, the enhanced data stream is then transmitted to the Broadcast Server 114 and finally to the one or more client systems. As explained above, these steps may be performed by other service provider and/or server components as well.

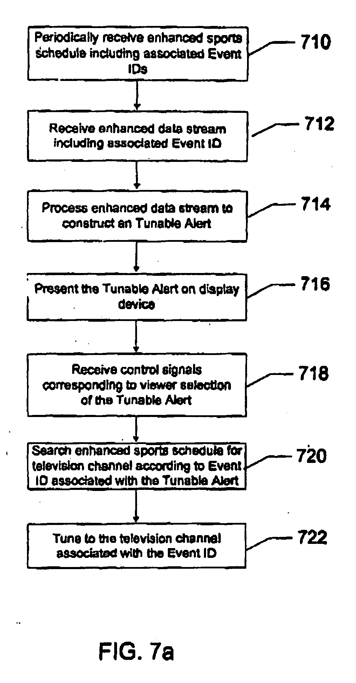

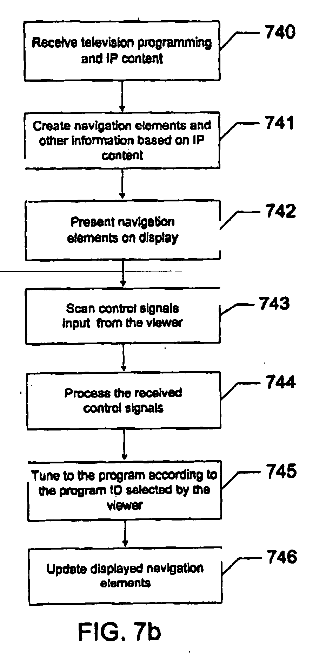

FIG. 7a and FIG. 7b illustrate flow charts in accordance with the two exemplary embodiments of the client system 100 for enabling a tunable alert. In FIG. 7a, the client system periodically receives an enhanced sports schedule with associated Event Identification data, as shown at a block 710. An enhanced data stream, which also includes Event Identification data, is also received at a block 712. At block 714, the client system constructs a tunable Alert based on the received enhanced data stream. As explained below, the Alert may provide information concerning an event that is about to occur in some other sporting event. At block 716, the tunable Alert is presented on the display device. Upon receiving a control signal corresponding to the viewer's selection of the tunable Alert at a block 718, the client system searches the enhanced data stream for television channel according to the Event Identifier associated with the tunable Alert, as shown at a block 720. Finally, at a block 722, the client system tunes to the television channel associated with the Event Identifier.

FIG. 7b shows an operational flow chart of an application program, executing on the client system 100, to create a navigation guide according to another embodiment of the invention. In this embodiment, the enhanced content is associated with a corresponding television program at the client system. Execution of the program begins at step 740. In this step, broadcast programming data and IP content are initially received by the client system. As noted above, the programming data and the IP data are associated with their own unique identification information. Next, at step 741, the system operates to create navigation elements and other enhanced content based on the received IP content. As explained below, this step includes creating certain buttons. Alerts or other real-time indicators that inform the viewer of certain events or the active status of related television programs not currently being viewed. In addition, the system maps the program and content identification data to permit the IP content to be wrapped around the television program as presented to the viewer. Thereafter, at step 742, the client system 100 presents a navigation guide having one or more navigation elements on the display. In many instances, the system also presents a viewing window for displaying a currently viewed program.

At step 743, the system then control signals or other input information received from the viewer. These signals correspond to user selection of a desired program by highlighting or otherwise selecting a navigation element on the display. They are usually entered via the remote input unit 526 shown in FIG. 5. The system then processes the input control signals at step 744. Next, at step 745, the system operates to tune the broadcast program selected by the user. Finally, at step 746, the system updates the presented navigation elements and the viewing window.

While the Alerts shown in FIG. 6, FIG. 7a and FIG. 7b have been "tunable," Alerts that enable the client system to tune to an appropriate channel based on a previously associated Event Identifier, the invention may also be used to provide other types of Alerts. Such Alerts typically invoke another particular action by the client system. For example, an Alert sometimes triggers actions such as an extendable video recording. This may occur when a sporting event goes into overtime or extra innings. Another example of such an alternative type of Alert is a speculative record Alert. This Alert causes a client system to record an event that is of particular interest, even though the viewer did not request the system to record the event. For example, one type of speculative recording alert selected by the user causes the DVR engine to record all basketball games in the final 2 minutes. Thus, in this embodiment, an alert is transmitted to notify the client engine that a game is in the final 2 minutes. The alert corresponds to an Event ID, and the DVR then tunes to the channel specified by the Event ID to record the program. Another example of this feature is to speculatively record all games that enter an overtime period, all award shows that are in the last half-hour (on the assumption that the most important awards are presented then), or all late night talk shows in the first 10 minutes to record the monologues.

Although "tunable" alerts have been described, the present invention also enables the broadcast of alerts that may simply inform a user that an event of interest is about to occur to devices without tuners. For example, if a news program is about to discuss a company, an alert may be sent to an interested user's cell phone. The cell phone alert will simply inform the user that currently a program is being broadcast that is about to discuss the company of interest. The user can then either find a nearby television or other tunable device (such as a computer with a tuner card) to watch the program or can request that the program be recorded on the customer's home recording machine. In this embodiment, the cell phone, PDA, or other nontuner device is also downloaded the enhanced theme schedule that relates IP data to television program listings (as customized for the user). When the user selects the alert, the alert in this example merely displays the programming information or provides an option to remotely record the show.

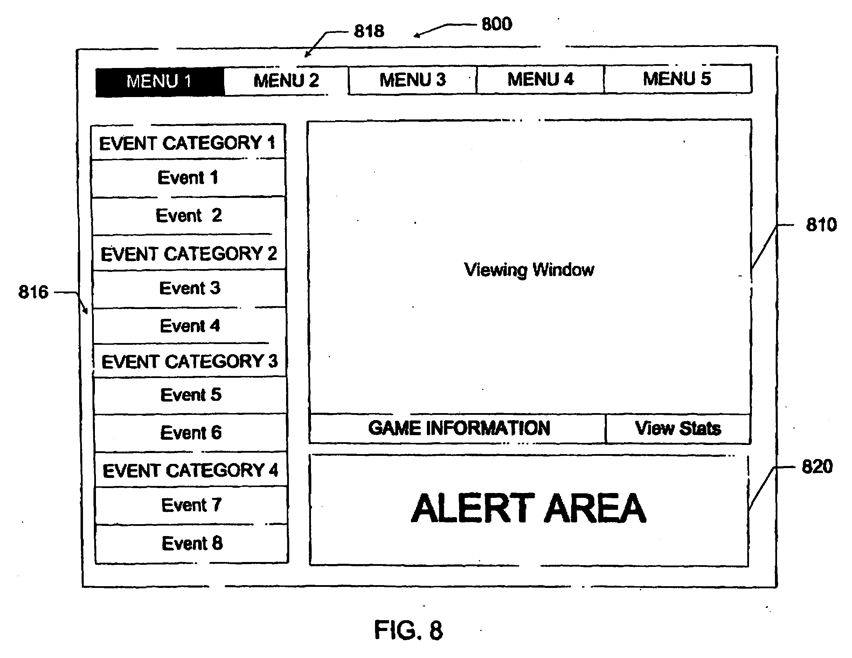

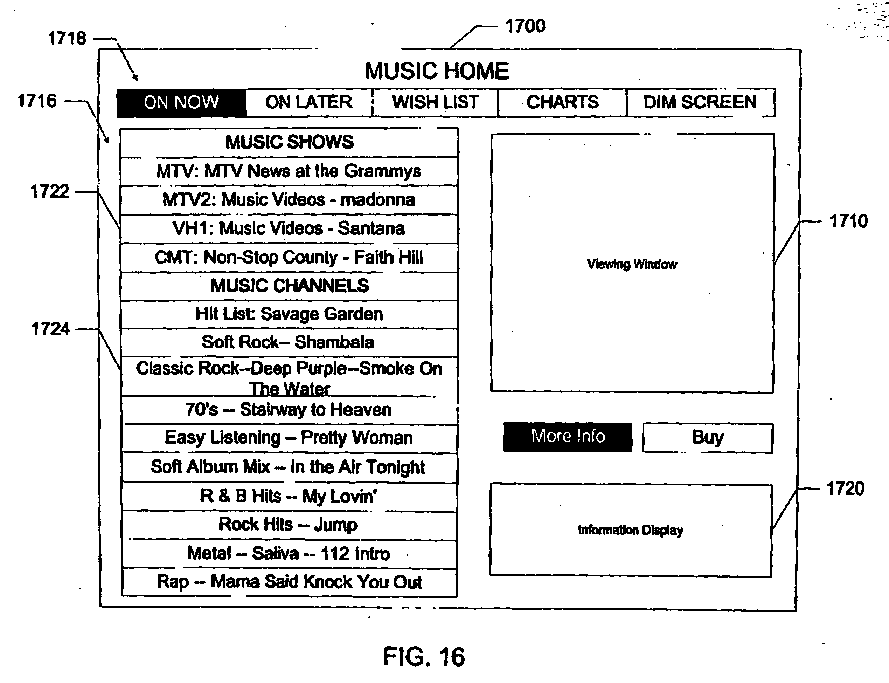

FIGS. 8 through 16 illustrate a user interface or display rendered by an application program using the data services delivered according to the invention. In these embodiments, the user interface has several unique display areas: a program viewing display area, a navigation guide area, and an Alert display area. The program display area is generally used to view television programming such as a particular sporting event. While in a navigation operational mode, this display area is reduced to a window size that only uses a portion of the display screen. The program viewing area may be resized based on an input request by the user. It should be understood, however, that the invention is not limited in any way to the specific manner in which the various window elements, such as the navigation guide and the video display area, are placed on the screen in the described embodiments.

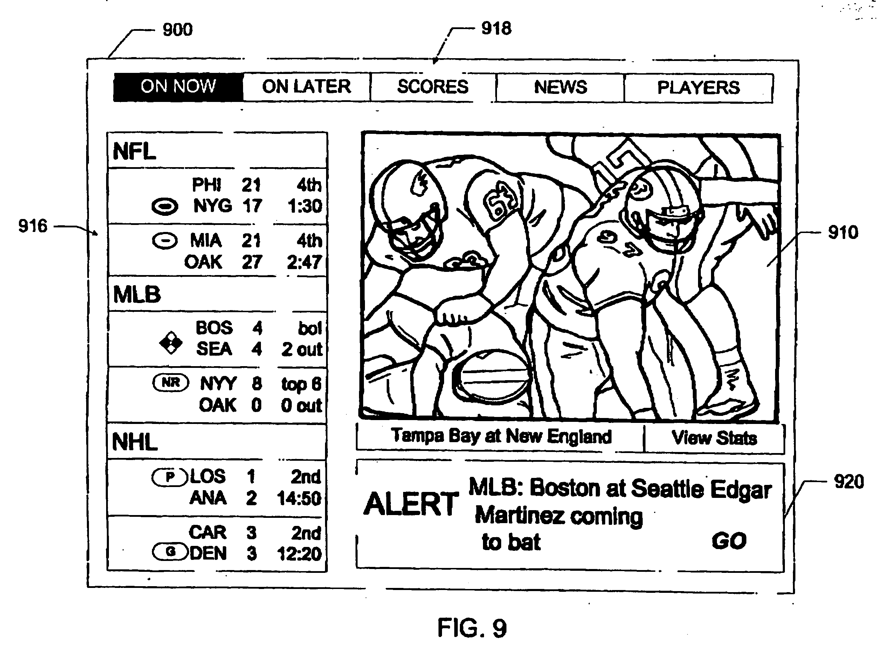

FIG. 8 shows the general layout of a novel navigation guide 800. The navigation guide is segregated into a program viewing window 810 and associated buttons, such as the "Game Information" and "View Stats" buttons shown in FIG. 8. These buttons provide access to additional information concerning the program currently being presented in the viewing window 810. Such information may be resident on the client system or the system may access a Web site that contains such information. In addition to the viewing window, the screen display contains various navigation sections. These are shown in FIG. 8 as a navigation guide or dashboard area 816 and a coarse navigation bar 818. As explained in conjunction with FIG. 9 below, the coarse navigation bar 818 provides a coarse filter for the types of information presented in navigation guide area 816. That is, in FIG. 8, the viewer has selected a "Menu 1" button in the coarse navigation bar that causes the system to present the specific navigation elements in the display area 816.

In addition to the coarse filtering provided by the navigation bar 818, the elements presented in the guide area 816 are logically grouped by event category. That is, the currently available programs, in this case sporting events, are grouped according to event type. Thus, Event Category 1 program offerings may include the currently available National Football League games. Event Category 2 programs may include Major League Baseball games and so on.

FIG. 9 shows a specific implementation of a navigation guide corresponding to the general screen layout described above. In this exemplary navigation guide, a program display window 910 presents a currently available football game, as well as buttons located proximate to the viewing window for further information concerning the game. For example, if the viewer selects a "Tampa Bay at New England" button, the system accesses additional information concerning the broadcast. Similarly, a "View Stats" button causes the system to present statistical information concerning the program.

The navigation guide 900 also provides coarse filters in the form of the menu items located in a coarse navigation area 918. In FIG. 9, the viewer has selected an "On Now" button that filters the currently available sporting events in the navigation guide area 916. The guide area 916 comprises navigation elements that are further segregated by event type. In the illustrated embodiment, the currently available NFL games are displayed as a collection of navigation elements. Likewise, navigation elements corresponding to available Major League Baseball games, as well as National Hockey League games, are collected and displayed as groupings.

As described, each of the navigation elements in the guide area 816 has certain information to assist the viewer in the decision-making process. For example, the first navigation element shown in FIG. 9 corresponds to the broadcast of a currently available football game, Philadelphia against New York. Real-time indications concerning the score and time remaining are presented. Other visual cues, such as a highlighted football in this navigation element, provide up-to-date information concerning game status such as the team currently possessing the football. The highlighting also signifies that the game is currently active.

In a second navigation element shown in FIG. 9, corresponding to the broadcast of a game involving Miami and Oakland, a visual cue in the form of a dimmed or non-highlighted football indicates that the game is currently inactive, This advantageously provides one important cue to the viewer, namely, the active status of other available sporting events. The active status of other events may, of course, be provided by other visual cues, such as through the lighting or darkening of the navigation element, or even through a tunable "time-in/time-out" Alert, as explained below.

The navigation tool creates other visual cues to provide real-time information concerning currently active baseball games, such as the team at bat, runners on base, score and inning. Finally, exemplary visual cues created for currently available hockey games inform the viewer of a power play or the scoring of a goal, as shown in the navigation elements in FIG. 9.

In accordance with another aspect of the invention, various data may be presented in conjunction with the enhanced sports schedule data presented in the navigation guide area. In particular, the screen display may also include a display area in which real-time event Alerts may be displayed to the viewer. This provides up-to-date information as to an event or action that either recently occurred or is about to occur in one or more of the currently available programs that are not being displayed in the display area. Since the Alerts include associated Event Identification data, they enable the client system to automatically tune to the channel associated with the Alert upon selection by the user.

In FIG. 9, a tunable Alert display area 920 presents real-time notification concerning an event in another active broadcast program. The Alert shown in FIG. 9 corresponds to one of the currently active baseball games in this scenario. It informs the viewer that a certain item of interest to the viewer is about to occur. In this case, a specific player is about to bat. The Alert window includes a "GO" button to permit the user to tune to the television broadcast. Thus, as with the navigation elements, the Alerts include Event Identification data to permit association with corresponding programming.

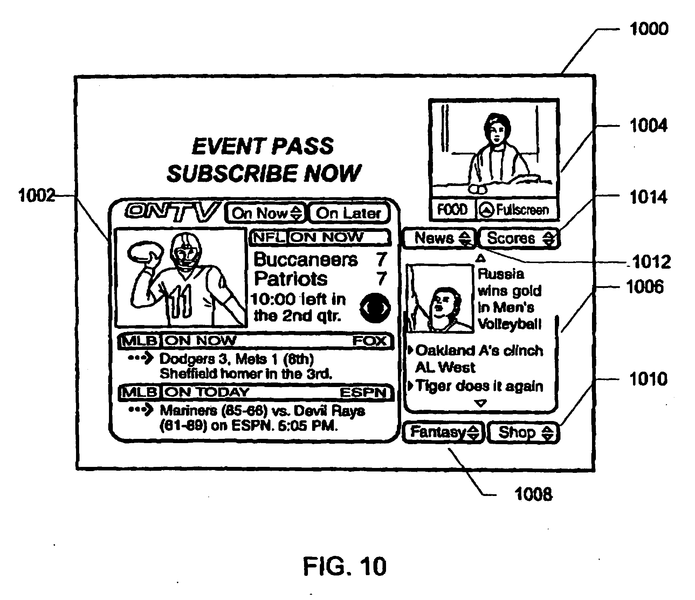

FIG. 10 illustrates a navigation screen 1000 according to a further embodiment of the invention. This navigation screen displays available broadcast television programming that is also filtered to correspond with various category types, albeit somewhat differently than the embodiments of FIGS. 8 and 9. The first program category relates to sporting events, as presented in a first viewing window 1002. A second display window or viewing area 1004 presents other viewing options. Such options are also grouped according to a specific interest category, such as cooking programs. Other display windows may also be utilized. For example, FIG. 10 illustrates a display window 1006 that presents information concerning news items of a specific category of interest.

In addition to viewing windows, the display 1000 includes viewer selectable buttons or controls. In the display screen shown in FIG. 10, such additional controls include a "Fantasy" button 1008 to permit information to be displayed concerning individual players, or groups of players, assigned to the viewer's Fantasy sports team. When selected, the system tunes to an appropriate channel, or accesses a Web site, that provides statistics and other information concerning specific teams or individuals as described by the viewer. In addition, a "Shop" button 1010 is used to direct the viewer to advertising or promotional items related to the programming being offered. A "News" button 1012 and a "Scores" button 1014 are also selectable to cause the system to deliver content, or a hyperlink that contains such content, concerning these topics as well.

In order to navigate through the various display screens or to select a desired program, the viewer preferably uses the input control pad 526 shown in FIG. 5. When the user has selected a display area or a display element that corresponds to available television programming, that display element will be presented as highlighted. Alternatively, the color of the display area may change to indicate that the user has selected the display area. As explained above, the data presented by the client system includes a previously associated Event Id. When the user selects a desired display area, the system looks up the appropriate channel in the previously delivered enhanced sports schedule and automatically tunes the television to that channel, which displays the selected programming.

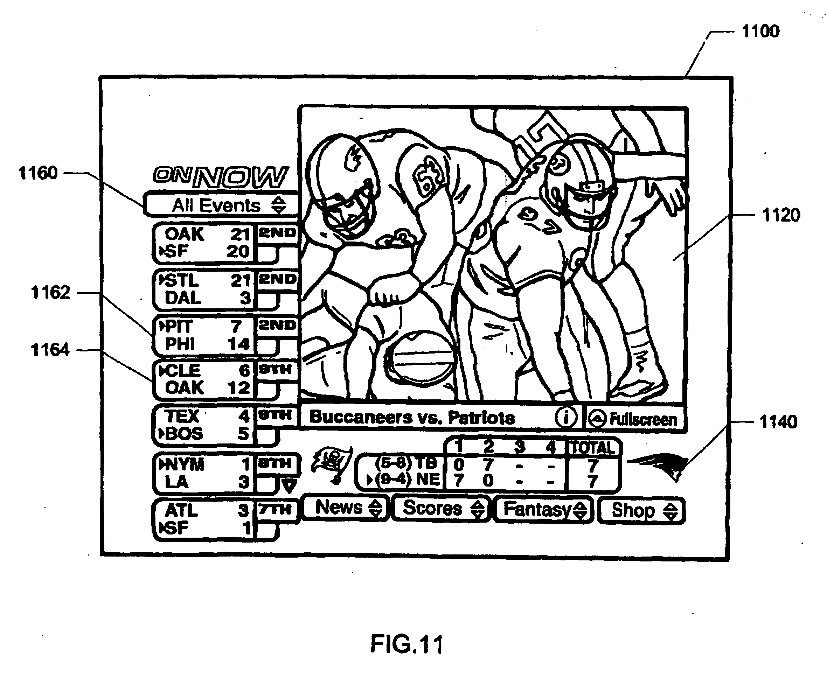

FIG. 11 illustrates another example of a navigation guide 1100. The presented navigation guide 1100 is segregated into a first display window area 1120, a navigation area 1160, and an information area 1140. The navigation area 1160 is further separated into one or more navigation elements such as navigation elements 1162 and 1164. In accordance with one aspect of the invention, the displayed navigation elements correspond to currently available programming selections of a given type. Thus, for example, the navigation elements shown in FIG. 11 correspond to currently available sporting events. When the viewer selects a desired navigation element such as element 1162, the system will automatically tune to that program and it will be displayed in the viewing area 1120. The display area 1120 includes various buttons such as a "Full screen" button that permits the user to exit from a navigation mode and to view a full screen display of the programming.

For providing an enhanced experience, the navigation elements are updated to provide information, preferably in real-time, to the viewer. Thus, in the embodiment shown in FIG. 11, the scores for the currently available sporting events, as shown in the navigation area 1160, are updated and presented to the viewer. Other icons are utilized to provide additional information in the navigation display area. For example, an icon indicating possession of the football, or the team currently at bat, are also presented to the viewer. In accordance with an embodiment of the invention, such information is merged together with the enhanced sports schedule data presented in the navigation display area of the screen.

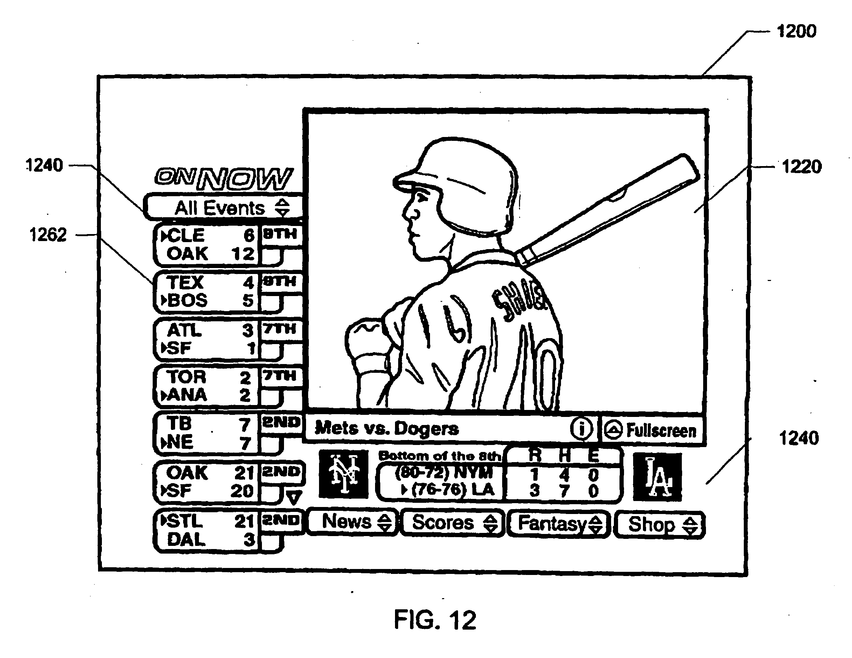

FIG. 12 illustrates a screen display 1200 that is similar to the display screen 1100 shown in FIG. 11, in that it includes a viewing display area 1220 and a navigation area 1240. In this instance, however, the viewer has selected programming of a slightly different type, namely, a currently active baseball game instead of a football game. According to the invention, the navigation display area 1240 is then updated to present other viewing options according to the viewer's preferences. That is, the navigation elements such as element 1262 are reordered as compared to the screen shown in FIG. 11 to present other options that are most likely of interest to the viewer based on the program being viewed. In addition, the navigation elements in the navigation display area 1220 are updated to reflect current scores as well as other important information.

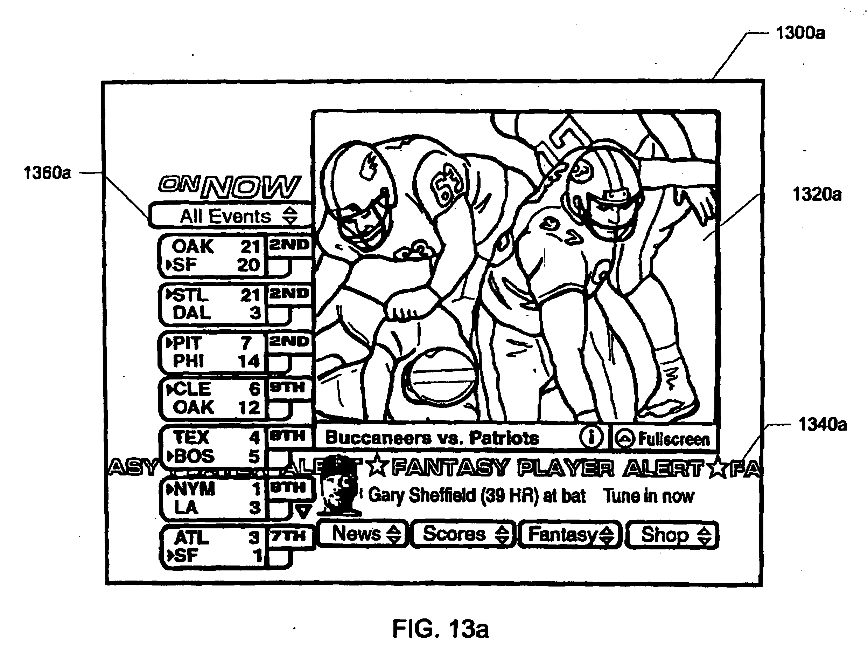

FIG. 13a illustrates a further display screen 1300a that employs one type of Alert indicator according to the invention. As with the embodiments in FIGS. 11 and 12, the display is segregated into a viewing area 1320a and a navigation guide area 1360a. The navigation elements presented in this area of the display are similar to those described above. FIG. 13a also illustrates an Alert display area 1340a that is utilized to provide specific information of interest to the viewer. In this instance, the screen displays an alert corresponding to a player in which the viewer may have a particular interest. For example, the alert may correspond to a Fantasy player that is about to bat in another currently available sporting event.

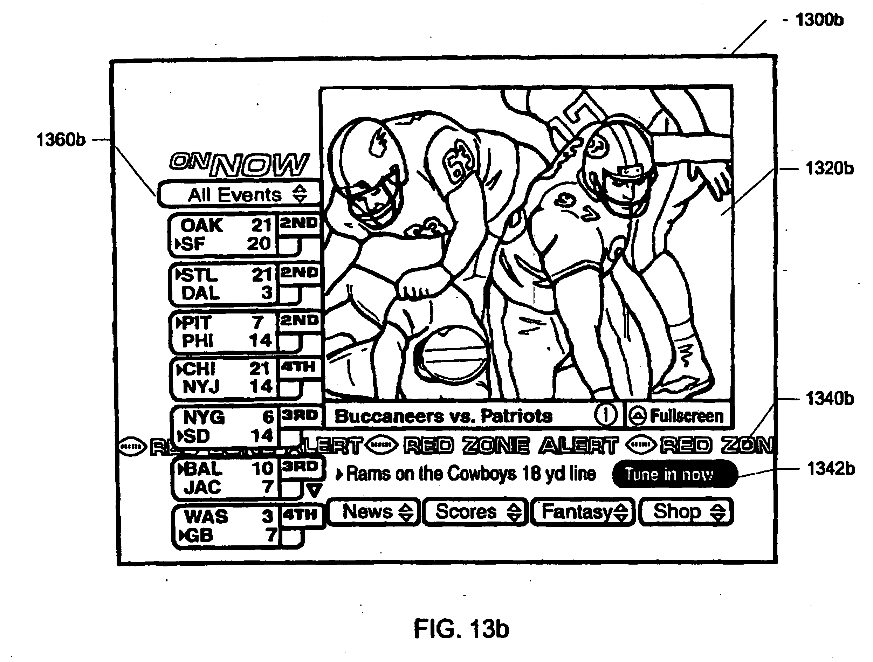

FIG. 13b illustrates another type of Alert that may be used in accordance with the invention. In this instance, an Alert display area 1340b presents information concerning an event that is about to occur in another broadcast program. As shown, a textual message is provided to the viewer to the effect that one team has just moved the football into the "Red Zone," namely within the opponent's 20-yard line, and is about to score a touchdown. The viewer may decide to view that program by simply selecting an appropriate button presented on the display, shown in FIG. 13b as a "Tune in now" button 1342b. In response to viewer selection, the system then automatically tunes to the program corresponding to the Alert display area 1340b. Numerous additional Alerts may be created in accordance with any number of defined game rules. These include the occurrence of a scoring play, such as a touchdown in football or a run in baseball. Also, Alert notifications concerning individual athletes may be created any time the athlete performs, or is about to perform, a task.

Digital video recording features are also integrated in a DVR engine executed by the client system according to the invention. That is, the client system processes received real-time and other data services to provide enhanced DVR features. As explained above, the Broadcast Service generates triggers corresponding to game indices to permit storage, playback and viewing of recorded game segments. These include real-time event notifications concerning items of interest that correspond to specific points in the recorded video stream. In addition to the game play events described above, triggers are created notifying the client that a game being recorded has been prolonged, or even that a game of significant interest should be recorded based on profile information of the viewer. In the case of receipt of notification that a recording should be prolonged, the system automatically employs an Auto-extend feature to avoid loss of overtime or other unpredictable program overruns.

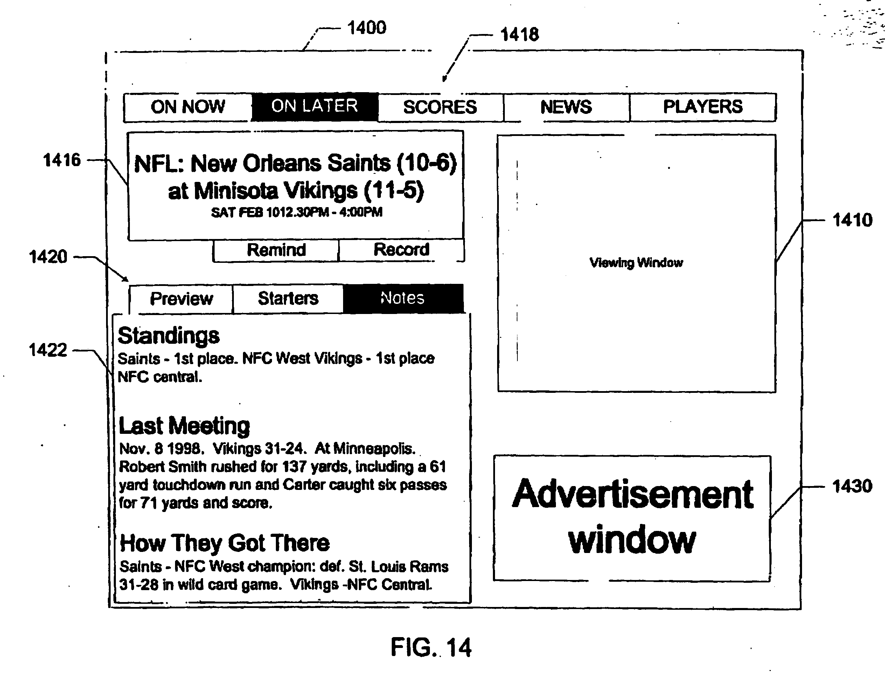

FIG. 14 illustrates a display screen that uses IP content to provide DVR services to the viewer. In this instance, the viewer has selected an "On Later" control in the coarse navigation bar 1418 on the display screen. This action causes the system to display sporting events that will be broadcast at some future time in the navigation guide area 1416. In addition, the display presents domain-specific enhanced content concerning the future event in an information display area 1422. As shown in FIG. 14, such information includes historical facts and other items of interest. The display also presents "Remind" and "Record" buttons that permit user selection of these features.

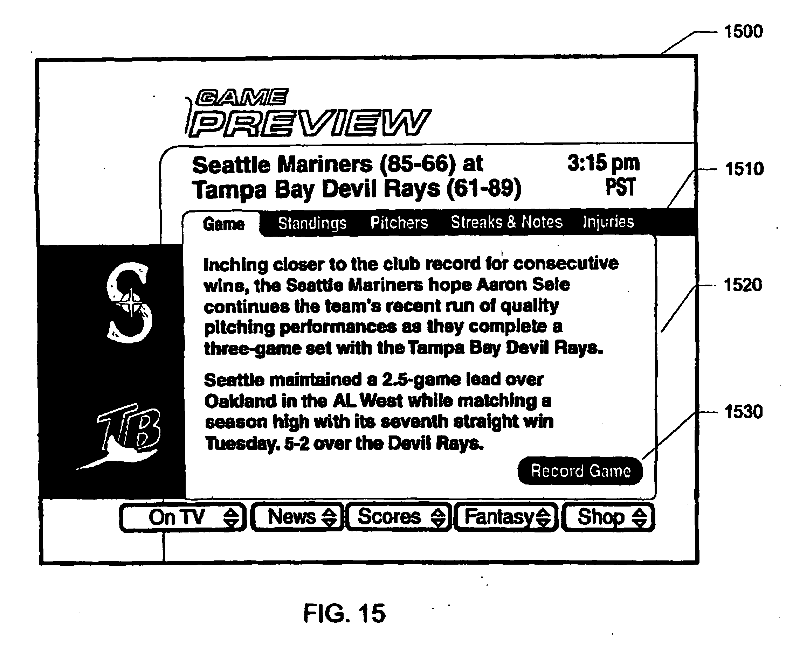

FIG. 15 illustrates an informational screen display showing preview information according to a further embodiment of the invention. For providing information concerning future programming that the viewer may wish to record, a preview or attraction display screen 1500 may be presented. When the invention is used in conjunction with the delivery of sporting events, the preview screen may provide an analysis concerning the importance of the game or like information in a preview viewing area 1520. A "Record" button 1530 enables the viewer to record the program through selection thereof Other information relevant to the selected game is displayed by highlighting associated buttons listed in a operation bar 1510 to enable viewer navigation among a "GAME" button; a "STANDINGS" button; a "PITCHERS" button; a "STREAKS & NOTES" button; and a "INJURIES" button. These buttons correspond to additional static and/or dynamic information related to the program.

As explained above, Alerts are also provided to the client system to trigger certain actions such as extend recording of a sporting event. Also, a speculative record Alert may be utilized which causes the system to begin recording an event such as a game of significant interest. This Alert may be created from profile information of the viewer, such as his favorite team or players, or location.

While the invention has been described primarily in conjunction with the integration of disparate data sources such as real-time IP data, Event Identification data and broadcast television programming, those skilled in the art will appreciate that many other data sources and data types may be integrated as well. For example, in the alternative or in addition to enhanced scheduling data, the invention may be used to integrate real time IP data with Event Identification data so that the user may make an informed decision on the programming of choice.

Similarly, the invention also has applicability to television programming other than sports programming. For example, the invention may also be deployed in the context of music, movies and news selections. FIG. 17 illustrates a user interface 1700 for navigating music entertainment programs according to another embodiment of the invention. This embodiment is particularly suited to output stereo sound to the audio system 126 shown in FIG. 5. In this embodiment, a navigation guide includes a program viewing window 1710, a navigation guide area 1716, and a coarse navigation area 1718 presenting a listing of types of music programs. While these programs in some instances are currently offered as television programs, they may also include digital radio programs. Thus, the navigation guide area presents currently available music television channels and provides in-progress information such as what video is currently playing, such as a "VH1: Music Videos- Santana" offering 1722. Optionally, the navigation guide area also presents currently available digital radio programs such as a "Classic Rock" offering 1724 and lists real-time information such as what song is currently being played on a specific channel. As with the above embodiments, the display may also be used to present tunable Alerts. Other Alerts are used to invoke particular actions by the client system.

The music navigation guide 1700 also includes various buttons such as, for example, "MORE INFO" and "BUY" buttons as shown in FIG. 17. When selected, information corresponding to these controls may be displayed in an information display area 1720.

Various advantages and features flow from the present invention. In prior systems, electronic programming data and other information was only statically presented to the viewer. Such information was decoupled from the broadcast television programming. In contrast, the present invention permits such data to be combined with real-time data to provide up-to-date information to the viewer. As indicated above, such real-time information may include an alert that a sporting event has gone into overtime or that it is otherwise prolonged. In addition to informing the viewer of programming that may be of interest, this information may be used to prolong the recording of the event or to alert the user to switch to that sporting event. In addition, the use of television controls enables the viewing of multiple video signals, and switching back and forth between the multiple video signals. The controls may be utilized to pause, replay and skip portions of a program being broadcast. This feature permits a viewer to choose to watch only indexed highlights and/or other specific features that would generally enhance the viewing experience.

The invention thus permits aggregation of content and meta-data for multiple television programs in one or more normalized content streams. On the other hand, known program enhancements are provided in multiple program-specific content streams in different content representations. Such known enhancements cannot be aggregated due to the stream retrieval overhead that would be required.

The invention is particularly useful in applications where programming of a specific type is aggregated, filtered in some way, and presented to the viewer. In the above-described embodiment, information concerning a particular subject matter or theme, such as currently available sporting events, is aggregated and presented to the user. The invention may also be employed to aggregate and present information concerning available musical programs, or even in other contexts such as available movies or news items.

Accordingly, an enhanced television service meeting the above objectives has been described. It should be understood, however, that the foregoing description has been limited to the presently contemplated best mode for practicing the invention. It will be apparent that various modifications may be made to the invention, and that some or all of the advantages of the invention may be obtained. Also, the invention is not intended to require each of the above-described features and aspects or combinations thereof, since in many instances, certain features and aspects are not essential for practicing other features and aspects. Accordingly, the invention should only be limited by the appended claims and equivalents thereof, which claims are intended to cover such other variations and modifications as come within the scope of the invention.

## Claims

1. A method of operating a server-client system in which first and second streams of data are transmitted to a client system (100), wherein the first stream of data corresponds to broadcast television programming data, and in which conventional broadcast television signals are displayed based on said first stream of data on a display (122) of the client system, said method comprising the steps of:
at a broadcast server (114), receiving from data providers (414) television schedule information and data associated with different enhanced Internet protocol (IP) data from a variety of sources, creating data services that are associated with a television content stream and delivering data services as the second stream of data to the client system; and
at a client system,
outputting a video signal to cause the display of broadcast television signals in a first designated portion (122a) of the display;
receiving from the broadcast server data services, wherein the data services are in the form of Internet protocol data that is associated with a particular television program, wherein the data providers create an event identifier for each program, event, or piece of content and associate that identifier with content related to that program by an event identifier (334);
displaying the Internet protocol data in a second designated portion of the display (122b), the Internet protocol data providing a plurality of selectable indicators based on the second received data stream;
extracting the event identifier associated with the data provided in the second stream of data, wherein the event identifier corresponds to an occurrence of an event in a second television broadcast;
displaying a real-time notification concerning the event in the second television broadcast in a third portion (122c, 920) of the display, wherein the real-time notification includes a selectable button;
selecting the selectable button; and
tuning the system to the second television broadcast.

2. The method of claim 1 further comprising:
receiving a schedule for a plurality of broadcast television listings, each of the plurality of television listings including a unique event identifier;
receiving enhanced Internet protocol (IP) data including an event identifier associating the IP data with one of the plurality of television listings;
presenting a visual cue based on the IP data on a video display (122);
receiving a viewer selection of the visual cue; and
tuning to the channel associated with the event ID in response to viewer selection of the visual cue.

3. The method as in claim 2 wherein the video display (122) is a conventional television receiver.

4. The method as in claim 2 wherein the Internet protocol data comprises a portion of the available television programming.

5. The method as in claim 4 wherein the Internet protocol data portion corresponds to broadcast television programming currently available to the viewer.

6. The method as in claim 5 wherein the Internet protocol data portion is filtered to correspond to currently available sports television programming.

7. The method as in claim 6 wherein the Internet protocol data portion is filtered to correspond to other sports television programming currently in progress.

8. The method as in claim 4 wherein the unique identifier corresponding to the television programming is the same as the identifier corresponding to the IP data.

9. The method of claim 1 further comprising the steps of:
receiving television scheduling data concerning a plurality of televised sporting events, each of which includes an associated unique event identifier;
receiving a content stream including at least one unique event identifier while one the plurality of sporting events is being broadcast;
presenting a tunable alert (715) in response to the received content stream;
in response to user selection of the tunable alert, determining a channel associated with the alert based on the unique event identifier; and
automatically tuning to the associated channel.

10. The method as in claim 9 wherein the content stream is a real-time content stream.

11. The method as in claim 9 wherein the tunable alert presents information concerning other in-progress sporting events.

12. The method as in claim 9 wherein the tunable alert presents information concerning the active status of an in-progress sporting event.

13. The method as in claim 9 wherein the content stream relates to currently available movies.

14. The method as in claim 9 wherein the content stream relates to currently available news events.

15. The method as in claim 9 wherein the content stream relates to currently available music offerings.

16. The method as in claim 10 wherein the real-time content comprises a portion of the currently available television programming.

17. The method as in claim 16 wherein the real-time content corresponds to sports broadcast television programming currently available to the viewer.

18. The method as in claim 17 wherein the real-time content alerts the viewer to the occurrence of an event in sports television programming that is not currently being viewed.

19. The method as in claim 18 wherein the real-time content alerts the viewer to sports television programming currently in progress.

20. The method of claim 1 further comprising:
displaying a representation of a sports score data string on a display device (122);
receiving a selection from the user of the representation of the sports score data string; and
tuning the display device to display a channel responsive to the tuning information associated with the sports score data string.

21. The method as in claim 20 further including the steps of:
receiving an updated sports score data string associated with tuning information; and
displaying an updated representation of the sports score data string on the display device.

22. The method as in claim 20 wherein the sports score data string includes information relating to the occurrence of an event in a televised football game.

23. The method as in claim 20 wherein the sports score data string includes information relating to scoring a touchdown in a televised football game.

24. The method as in claim 20 wherein the sports score data string includes information relating to the occurrence of a turn-over in a televised football game.

25. The method as in claim 20 wherein the sports score data string includes information relating to the entry of a team into the red-zone during a televised football game.

26. The method as in claim 20 wherein the sports score data string includes information relating to a baseball player about to commence an at-bat.

27. The method as in claim 20 wherein the sports score data string includes information relating to a participant in a televised football game.

28. The method as in claim 20 wherein the sports score data string includes information relating to a participant in a televised baseball game.

29. The method as in claim 20 wherein the sports score data string includes information relating to a participant in a televised basketball game.

30. The method as in claim 22 further comprising the steps of:
after tuning the display device (122) to the channel responsive to the tuning information, receiving a second sports score data string associated with a televised baseball game, wherein the second sports score data string is associated with tuning information;
displaying a representation of the second sports score data string on the display device;
receiving a selection from the user of the representation of the second sports score data string; and
tuning the display device to display a channel responsive to the tuning information associated with the second sports score data string.

31. A broadcast server adapted to operate in accordance with one of claims 1 to 30.

32. A client system in a server-client system comprising a broadcast server (114) and the client system (100) for broadcast television service, wherein the broadcast server comprises means for creating data services that are associated with a television content stream by receiving from data providers (414) television schedule information and data associated with different enhanced Internet protocol (IP) data from a variety of sources, and means for delivering data services to the client system; and wherein the client system comprises:
means for receiving broadcast television programming and for presenting the programming in a first designated portion (122a) of a display device (122);
means for receiving data services in the form of Internet protocol data that is not provided in the program band and that is associated with a particular television program delivered to the client, wherein the data providers create an event identifier for each program, event, or piece of content and associate that identifier with content related to that program by an event identifier (334);
means for displaying the Internet protocol data in a second designated portion (122b) of the display device;
means for extracting the event identifier associated with the data provided in the second stream of data, wherein the event identifier corresponds to an occurrence of an event in a second television broadcast;
means for displaying a real-time notification concerning the event in the second television broadcast in a third portion (122c, 920) of the display, wherein the real-time notification includes a selectable button;
means for linking the broadcast television programming with the Internet protocol data; and
means for tuning the system to the second television broadcast corresponding to the event.

33. The system as in claim 32 wherein said means for receiving comprises multiple digital tuners.

34. The system as in claim 32 further comprising digital video recording apparatus disposed to record one or more of the received broadcast television programming.

## Patentansprüche

1. Verfahren zum Betreiben eines Server-Client-Systems, bei dem erste und zweite Datenströme zu einem Clientsystem (100) gesendet werden, wobei der erste Datenstrom übertragenen Fernsehprogrammdaten entspricht, und bei dem herkömmliche übertragene Fernsehsignale auf der Basis des ersten Datenstroms auf einer Anzeigevorrichtung (122) des Clientsystems angezeigt werden, wobei das Verfahren folgende Schritte umfasst:
Empfangen von Fernsehzeitplaninformationen und Daten, die mit unterschiedlichen erweiterten IP-Daten (IP - Internetprotokoll) von einer Vielfalt von Quellen assoziiert sind, von Datenanbietern (414) an einem Übertragungsserver (114), Erzeugen von Datendiensten, die mit einem Fernsehinhaltsstrom assoziiert sind, und Zustellen von Datendiensten als den zweiten Datenstrom zu dem Clientsystem und,
an dem Clientsystem,
Ausgeben eines Videosignals, um die Anzeige von übertragenen Fernsehsignalen in einem ersten bestimmten Abschnitt (122a) der Anzeigevorrichtung zu bewirken;
Empfangen von Datendiensten von dem Übertragungsserver, wobei die Datendienste die Gestalt von Internetprotokolldaten haben, die mit einem speziellen Fernsehprogramm assoziiert sind, und die Datendienste ein Ereigniskennzeichen für jedes Programm, Ereignis oder Inhaltsstück erzeugen und dieses Kennzeichen mit Inhalt, der sich auf dieses Programm bezieht, durch ein Ereigniskennzeichen (334) assoziierten;
Anzeigen der Internetprotokolldaten in einem zweiten bestimmten Abschnitt der Anzeigevorrichtung (122b), wobei die Internetprotokolldaten eine Vielzahl wählbarer Indikatoren auf der Basis des zweiten empfangenen Datenstroms bereitstellen;
Extrahieren des Ereigniskennzeichens, das mit den Daten assoziiert ist, die in dem zweiten Datenstrom bereitgestellt werden, wobei das Ereigniskennzeichen einem Auftreten eines Ereignisses in einer zweiten Fernsehübertragung entspricht;
Anzeigen einer Echtzeitmitteilung, die das Ereignis in der zweiten Fernsehübertragung betrifft, in einem dritten Abschnitt (122c, 920) der Anzeigevorrichtung, wobei die Echtzeitmitteilung eine wählbare Taste umfasst;
Wählen der wählbaren Taste; und
Abstimmen des Systems auf die zweite Fernsehübertragung.

2. Verfahren nach Anspruch 1, weiterhin umfassend:
Empfangen eines Zeitplans für eine Vielzahl von übertragenen Fernsehauflistungen, wobei jede der Vielzahl von Fernsehauflistungen ein eindeutiges Ereigniskennzeichen enthält;
Empfangen erweiterter IP-Daten (IP - Internetprotokoll), die ein Ereigniskennzeichen enthalten, das die IP-Daten mit einer der Vielzahl von Fernsehauflistungen assoziiert;
Darstellen eines visuellen Hinweises auf der Basis der IP-Daten auf einer Video-Anzeigevorrichtung (122);
Empfangen einer Zuschauerauswahl des visuellen Hinweises; und
Abstimmen auf den Kanal, der mit dem Ereignis-ID assoziiert ist, in Erwiderung auf die Zuschauerauswahl des visuellen Hinweises.

3. Verfahren nach Anspruch 2, bei dem die Video-Anzeigevorrichtung (122) ein herkömmlicher Fernsehempfänger ist.

4. Verfahren nach Anspruch 2, bei dem die Internetprotokolldaten einen Teil des verfügbaren Fernsehprogramms enthalten.

5. Verfahren nach Anspruch 4, bei dem der Internetprotokolldatenteil einem übertragenen Fernsehprogramm entspricht, das für den Benutzer momentan verfügbar ist.

6. Verfahren nach Anspruch 5, bei dem der Internetprotokolldatenteil gefiltert wird, um einem momentan verfügbaren Sportfernsehprogramm zu entsprechen.

7. Verfahren nach Anspruch 6, bei dem der Internetprotokolldatenteil gefiltert wird, um anderen Sportfernsehprogrammen zu entsprechen, die derzeit im Fortschritt sind.

8. Verfahren nach Anspruch 4, bei dem das eindeutige Kennzeichen, das dem Fernsehprogramm entspricht, dasselbe ist wie das Kennzeichen, das den IP-Daten entspricht.

9. Verfahren nach Anspruch 1, weiterhin umfassend folgende Schritte:
Empfangen von Fernseh-Zeitplandaten, die eine Vielzahl von im Fernsehen übertragenen Sportereignissen betreffen, von denen jedes ein assoziierte eindeutiges Ereigniskennzeichen enthält;
Empfangen eines Inhaltsstroms, der wenigstens ein eindeutiges Ereigniskennzeichen enthält, während eines aus der Vielzahl von Sportereignissen übertragen wird;
Darstellen einer abstimmbaren Warnung (716) in Erwiderung auf den empfangenen Inhaltsstrom;
in Erwiderung auf die Benutzerauswahl der abstimmbaren Warnung, Bestimmen eines Kanals, der mit der Warnung assoziiert ist, basierend auf dem eindeutigen Ereigniskennzeichen; und
automatisches Abstimmen auf den assoziierten Kanal.

10. Verfahren nach Anspruch 9, bei dem der Inhaltsstrom ein Echtzeit-Inhaltsstrom ist.

11. Verfahren nach Anspruch 9, bei dem die abstimmbare Warnung Informationen darstellt, die andere im Fortschritt befindliche Sportereignisse betreffen.

12. Verfahren nach Anspruch 9, bei dem die abstimmbare Warnung Informationen darstellt, die einen aktiven Status eines sich im Fortschritt befindlichen Sportereignisses betreffen.

13. Verfahren nach Anspruch 9, bei dem sich der Inhaltsstrom auf momentan verfügbare Filme bezieht.

14. Verfahren nach Anspruch 9, bei dem sich der Inhaltsstrom auf momentan verfügbare Nachrichtenereignisse bezieht.

15. Verfahren nach Anspruch 9, bei dem sich der Inhaltsstrom auf momentan verfügbare Musikangebote bezieht.

16. Verfahren nach Anspruch 10, bei dem der Echtzeitinhalt einen Teil des momentan verfügbaren Fernsehprogramms enthält.

17. Verfahren nach Anspruch 16, bei dem der Echtzeitinhalt einem Sportübertragungs-Fernsehprogramm entspricht, das für den Zuschauer momentan verfügbar ist.

18. Verfahren nach Anspruch 17, bei dem der Echtzeitinhalt den Zuschauer auf das Auftreten eines Ereignisses in dem Sportfernsehprogramm hinweist, das momentan nicht betrachtet wird.

19. Verfahren nach Anspruch 18, bei dem der Echtzeitinhalt den Zuschauer auf ein Sportfernsehprogramm hinweist, das momentan im Fortschritt ist.

20. Verfahren nach Anspruch 1, weiterhin umfassend:
Anzeigen einer Darstellung einer Sportergebnisdaten-Zeichenfolge auf einer Anzeigevorrichtung (122);
Empfangen einer Auswahl der Darstellung der Sportergebnisdaten-Zeichenfolge von dem Benutzer; und
Abstimmen der Anzeigevorrichtung, um einen Kanal in Erwiderung auf die Abstimminformationen anzuzeigen, die mit der Sportergebnisdaten-Zeichenfolge assoziiert sind.

21. Verfahren nach Anspruch 20, weiterhin umfassend folgende Schritte:
Empfangen einer aktualisierten Sportergebnisdaten-Zeichenfolge, die mit Abstimminformationen assoziiert ist; und
Anzeigen einer aktualisierten Darstellung der Sportergebnisdaten-Zeichenfolge auf der Anzeigevorrichtung.

22. Verfahren nach Anspruch 20, bei dem die Sportergebnisdaten-Zeichenfolge Informationen enthält, die sich auf das Auftreten eines Ereignisses in einem im Fernsehen übertragenen Footballspiel beziehen.

23. Verfahren nach Anspruch 20, bei dem die Sportergebnisdaten-Zeichenfolge Informationen enthält, die sich auf das Erzielen eines Touchdowns in einem im Fernsehen übertragenen Footballspiel beziehen.

24. Verfahren nach Anspruch 20, bei dem die Sportergebnisdaten-Zeichenfolge Informationen enthält, die sich auf das Auftreten eines Turnovers in einem im Fernsehen übertragenen Footballspiel beziehen.

25. Verfahren nach Anspruch 20, bei dem die Sportergebnisdaten-Zeichenfolge Informationen enthält, die sich auf das Eindringen einer Mannschaft in die Red Zone während eines im Fernsehen übertragenen Footballspiels beziehen.

26. Verfahren nach Anspruch 20, bei dem die Sportergebnisdaten-Zeichenfolge Informationen enthält, die sich auf einen Baseballspieler beziehen, der im Begriff ist, einen At-Bat auszuführen.

27. Verfahren nach Anspruch 20, bei dem die Sportergebnisdaten-Zeichenfolge Informationen enthält, die sich auf einen Teilnehmer in einem im Fernsehen übertragenen Footballspiel beziehen.

28. Verfahren nach Anspruch 20, bei dem die Sportergebnisdaten-Zeichenfolge Informationen enthält, die sich auf einen Teilnehmer in einem im Fernsehen übertragenen Baseballspiel beziehen.

29. Verfahren nach Anspruch 20, bei dem die Sportergebnisdaten-Zeichenfolge Informationen enthält, die sich auf einen Teilnehmer in einem im Fernsehen übertragenen Basketballspiel beziehen.

30. Verfahren nach Anspruch 22, weiterhin umfassend folgende Schritte:
nach dem Abstimmen der Anzeigevorrichtung (122) auf den Kanal in Erwiderung auf die Abstimminformationen, Empfangen einer zweiten Sportergebnisdaten-Zeichenfolge, die mit einem im Fernsehen übertragenen Baseballspiel assoziiert ist, wobei die zweite Sportergebnisdaten-Zeichenfolge mit Abstimminformationen assoziiert ist;
Anzeigen einer Darstellung der zweiten Sportergebnisdaten-Zeichenfolge auf der Anzeigevorrichtung;
Empfangen einer Auswahl der Darstellung der zweiten Sportergebnisdaten-Zeichenfolge von dem Benutzer; und
Abstimmen der Anzeigevorrichtung, um einen Kanal in Erwiderung auf die Abstimminformationen anzuzeigen, die mit der zweiten Sportergebnisdaten-Zeichenfolge assoziiert sind.

31. Übertragungsserver, der dazu eingerichtet ist, in Übereinstimmung mit einem der Ansprüche 1 bis 30 zu arbeiten.

32. Clientsystem in einem Server-Client-System, umfassend einen Übertragungsserver (114) und das Clientsystem (100) für einen Übertragungsfernsehdienst, wobei der Übertragungsserver umfasst: Einrichtungen zum Erzeugen von Datendiensten, die mit einem Fernsehinhaltsstrom assoziiert werden, indem von Datenanbietern (414) Fernsehzeitplaninformationen und Daten empfangen werden, die mit unterschiedlichen erweiterten IP-Daten (IP - Internetprotokoll) von einer Vielfalt von Quellen assoziiert sind, und Einrichtungen zum Zustellen von Datendiensten zu dem Clientsystem; wobei das Clientsystem umfasst:
eine Einrichtung zum Empfangen eines übertragenen Fernsehprogramms und zum Darstellen des Programms in einem ersten bestimmten Abschnitt (122a) einer Anzeigevorrichtung (122);
eine Einrichtung zum Empfangen von Datendiensten in Gestalt von Internetprotokolldaten, die nicht in dem Programmband bereitgestellt werden und mit einem speziellen Fernsehprogramm assoziiert sind, das dem Client zugestellt wird, wobei die Datenanbieter ein Ereigniskennzeichen für jedes Programm, Ereignis oder Inhaltsstück erzeugen und dieses Kennzeichen mit Inhalt, der sich auf dieses Programm bezieht, durch ein Ereigniskennzeichen (334) assoziierten;
eine Einrichtung zum Anzeigen der Internetprotokolldaten in einem zweiten bestimmten Abschnitt (122b) der Anzeigevorrichtung;
eine Einrichtung zum Extrahieren des Ereigniskennzeichens, das mit den Daten assoziiert ist, die in dem zweiten Datenstrom bereitgestellt werden, wobei das Ereigniskennzeichen einem Auftreten eines Ereignisses in einer zweiten Fernsehübertragung entspricht;
eine Einrichtung zum Anzeigen einer Echtzeitmitteilung, die das Ereignis in der zweiten Fernsehübertragung betrifft, in einem dritten Abschnitt (122c, 920) der Anzeigevorrichtung, wobei die Echtzeitmitteilung eine wählbare Taste umfasst;
eine Einrichtung zum Verknüpfen des übertragenen Fernsehprogramms mit den Internetprotokolldaten; und
eine Einrichtung zum Abstimmen des Systems auf die zweite Fernsehübertragung entsprechend dem Ereignis.

33. System nach Anspruch 32, bei dem die Einrichtung zum Empfangen mehrere digitale Abstimmgeräte umfasst.

34. System nach Anspruch 32, weiterhin umfassend ein digitales Videoaufzeichnungsgerät, das dazu eingerichtet ist, wenigstens eines der empfangenen übertragenen Fernsehprogramme aufzuzeichnen.

## Revendications

1. Procédé de fonctionnement d'un système serveur-client dans lequel des premier et deuxième flux de données sont transmis à un système client (100), dans lequel le premier flux de données correspond à des données de programmation de télévision hertzienne, et dans lequel des signaux de télévision hertzienne conventionnels sont affichés sur base dudit premier flux de données sur un affichage (122) du système client, ledit procédé comprenant les étapes consistant à :
sur un serveur de diffusion (114), recevoir de fournisseurs de données (414) de l'information de programme de télévision et des données associées à différentes données améliorées de protocole Internet (soit Internet Protocol, ou IP) provenant d'une diversité de sources, créer des services de données qui sont associés à un flux de contenu télévisé, et fournir des services de données comme deuxième flux de données au système client ; et
sur un système client, sortir un signal vidéo pour commander l'affichage de signaux de télévision hertzienne dans une première section désignée (122a) de l'affichage ;
recevoir en provenance du serveur de diffusion des services de données, dans lequel les services de données sont sous la forme de données de protocole Internet qui sont associées à un programme de télévision particulier, dans lequel les fournisseurs de données créent un identifiant d'évènement pour chaque programme, évènement ou élément de contenu et associent cet identifiant à un contenu lié à ce programme par un identifiant d'évènement (334) ;
afficher les données de protocole Internet dans une deuxième section désignée de l'affichage (122b), les données de protocole Internet procurant une pluralité d'indicateurs sélectionnables sur base du deuxième flux de données reçu ;
extraire l'identifiant d'évènement associé aux données fournies dans le deuxième flux de données, dans lequel l'identifiant d'évènement correspond à une occurrence d'un évènement dans une deuxième diffusion télévisée ;
afficher une notification en temps réel concernant l'évènement dans la deuxième diffusion télévisée dans une troisième section (122c, 920) de l'affichage, dans lequel la notification en temps réel comprend un bouton sélectionnable ;
sélectionner le bouton sélectionnable ; et
syntoniser le système avec la deuxième diffusion télévisée.

2. Procédé selon la revendication 1, comprenant en outre :
la réception d'un horaire pour une pluralité de listes de télévision hertzienne, chaque liste de la pluralité de listes de télévision comprenant un identifiant d'évènement unique,
la réception de données améliorées de protocole Internet (IP) comprenant un identifiant d'évènement associant les données IP à une liste de la pluralité de listes de télévision ;
la présentation d'un repère visuel basé sur les données IP sur un affichage vidéo (122) ;
la réception d'une sélection de téléspectateur du repère visuel ; et
la syntonisation avec le canal associé à l'identifiant d'évènement en réponse à une sélection de téléspectateur du repère visuel.

3. Procédé selon la revendication 2, dans lequel l'affichage vidéo (122) est un téléviseur conventionnel.

4. Procédé selon la revendication 2, dans lequel les données de protocole Internet comprennent une section de la programmation de télévision disponible.

5. Procédé selon la revendication 4, dans lequel la section de données de protocole Internet correspond à une programmation de télévision hertzienne actuellement disponible pour le téléspectateur.

6. Procédé selon la revendication 5, dans lequel la section de données de protocole Internet est filtrée pour correspondre à une programmation de télévision sportive actuellement disponible.

7. Procédé selon la revendication 6, dans lequel la section de données de protocole Internet est filtrée pour correspondre à d'autres programmations de télévision sportive actuellement en cours.

8. Procédé selon la revendication 4, dans lequel l'identifiant unique correspondant à la programmation de télévision est le même que l'identifiant correspondant aux données IP.

9. Procédé selon la revendication 1, comprenant en outre les étapes consistant à :
recevoir des données de programmation de télévision concernant une pluralité d'évènements sportifs télévisés, dont chacun comprend un identifiant d'évènement unique associé ;
recevoir un flux de contenu comprenant au moins un identifiant d'évènement unique, alors qu'un évènement de la pluralité d'évènements sportifs est en cours de diffusion ;
présenter une alerte syntonisable (715) en réponse au flux de contenu reçu ;
en réponse à une sélection d'utilisateur de l'alerte syntonisable, déterminer un canal associé à l'alerte sur base de l'identifiant d'évènement unique, et
syntoniser automatiquement avec le canal associé.

10. Procédé selon la revendication 9, dans lequel le flux de contenu est un flux de contenu en temps réel.

11. Procédé selon la revendication 9, dans lequel l'alerte syntonisable présente de l'information concernant d'autres évènements sportifs en cours.

12. Procédé selon la revendication 9, dans lequel l'alerte syntonisable présente de l'information concernant l'état actif d'un évènement sportif en cours.

13. Procédé selon la revendication 9, dans lequel le flux de contenu a trait à des films couramment disponibles.

14. Procédé selon la revendication 9, dans lequel le flux de contenu a trait à des évènements d'actualité couramment disponibles.

15. Procédé selon la revendication 9, dans lequel le flux de contenu a trait à des offres de musique couramment disponibles.

16. Procédé selon la revendication 10, dans lequel le contenu en temps réel comprend une partie de la programmation de télévision couramment disponible.

17. Procédé selon la revendication 16, dans lequel le contenu en temps réel correspond à une programmation de télévision hertzienne sportive actuellement disponible pour le téléspectateur.

18. Procédé selon la revendication 17, dans lequel le contenu en temps réel alerte le téléspectateur de l'occurrence d'un évènement dans une programmation de télévision sportive qui n'est pas visualisée actuellement.

19. Procédé selon la revendication 18, dans lequel le contenu en temps réel alerte le téléspectateur d'une programmation de télévision sportive actuellement en cours.

20. Procédé selon la revendication 1, comprenant en outre :
l'affichage d'une représentation d'une chaîne de données de résultats sportifs sur un dispositif d'affichage (122) ;
la réception d'une sélection provenant de l'utilisateur de la représentation de la chaîne de données de résultats sportifs ; et
la syntonisation du dispositif d'affichage pour afficher un canal répondant à l'information de syntonisation associée à la chaîne de données de résultats sportifs.

21. Procédé selon la revendication 20, comprenant en outre les étapes consistant à :
recevoir une chaîne de données de résultats sportifs mises à jour associée à de l'information de syntonisation ; et
afficher une représentation mise à jour de la chaîne de données de résultats sportifs sur le dispositif d'affichage.

22. Procédé selon la revendication 20, dans lequel la chaîne de données de résultats sportifs comprend de l'information relative à l'occurrence d'un évènement dans un jeu de football américain télévisé.

23. Procédé selon la revendication 20, dans lequel la chaîne de données de résultats sportifs comprend de l'information relative à l'occurrence d'un essai marqué dans un jeu de football américain télévisé.

24. Procédé selon la revendication 20, dans lequel la chaîne de données de résultats sportifs comprend de l'information relative à l'occurrence d'une perte de ballon dans un jeu de football américain télévisé.

25. Procédé selon la revendication 20, dans lequel la chaîne de données de résultats sportifs comprend de l'information relative à l'entrée d'une équipe dans la zone rouge durant un jeu de football américain télévisé.

26. Procédé selon la revendication 20, dans lequel la chaîne de données de résultats sportifs comprend de l'information relative à un joueur de baseball sur le point de commencer une présence officielle au bâton.

27. Procédé selon la revendication 20, dans lequel la chaîne de données de résultats sportifs comprend de l'information relative à un participant dans un jeu de football américain télévisé.

28. Procédé selon la revendication 20, dans lequel la chaîne de données de résultats sportifs comprend de l'information relative à un participant dans un jeu de baseball télévisé.

29. Procédé selon la revendication 20, dans lequel la chaîne de données de résultats sportifs comprend de l'information relative à un participant dans un jeu de basketball télévisé.

30. Procédé selon la revendication 22, comprenant en outre les étapes consistant à :
après la syntonisation du dispositif d'affichage (122) avec le canal répondant à l'information de syntonisation, recevoir une deuxième chaîne de données de résultats sportifs associée à un jeu de baseball télévisé, dans lequel la deuxième chaîne de données de résultats sportifs est associée à de l'information de syntonisation ;
afficher une représentation de la deuxième chaîne de données de résultats sportifs sur un dispositif d'affichage ;
recevoir une sélection provenant de l'utilisateur de la représentation de la deuxième chaîne de données de résultats sportifs ; et
syntoniser le dispositif d'affichage pour afficher un canal répondant à l'information de syntonisation associée à la deuxième chaîne de données de résultats sportifs.

31. Serveur de diffusion adapté pour fonctionner conformément à l'une des revendications 1 à 30.

32. Système client dans un système serveur-client comprenant un serveur de diffusion (114) et le système client (100) pour un service de télévision hertzienne, dans lequel le serveur de diffusion comprend un moyen pour créer des services de données qui sont associés à un flux de contenu télévisé en recevant de fournisseurs de données (414) de l'information de programme de télévision et des données associées à différentes données améliorées de protocole Internet (IP) provenant d'une diversité de sources, et un moyen pour procurer des services de données au système client ; et dans lequel le système client comprend :
un moyen pour recevoir une programmation de télévision hertzienne et pour présenter la programmation dans une première section désignée (122a) d'un dispositif d'affichage (122) ;
un moyen pour recevoir des services de données sous forme de données de protocole Internet qui ne sont pas fournies dans la bande de programme et qui sont associées à un programme de télévision particulier fourni au client, dans lequel les fournisseurs de données créent un identifiant d'évènement pour chaque programme, évènement ou élément de contenu et associent cet identifiant à un contenu lié à ce programme par un identifiant d'évènement (334) ;
un moyen pour afficher les données de protocole Internet dans une deuxième section désignée (122b) du dispositif d'affichage ;
un moyen pour extraire l'identifiant d'évènement associé aux données fournies dans le deuxième flux de données, dans lequel l'identifiant d'évènement correspond à une occurrence d'un évènement dans une deuxième diffusion télévisée ;
un moyen pour afficher une notification en temps réel concernant l'évènement dans la deuxième diffusion télévisée dans une troisième section (122c, 920) de l'affichage, dans lequel la notification en temps réel comprend un bouton sélectionnable ;
un moyen pour relier la programmation de télévision hertzienne aux données de protocole Internet ; et
un moyen pour syntoniser le système avec la deuxième diffusion télévisée correspondant à l'évènement.

33. Système selon la revendication 32, dans lequel ledit moyen de réception comprend de multiples syntoniseurs digitaux.

34. Système selon la revendication 32, comprenant en outre un appareil d'enregistrement vidéo numérique agencé pour enregistrer une ou plusieurs des programmations de télévision hertzienne reçues.
